# EUROPEAN PATENT APPLICATION

(11) **EP 4 717 443 A1**
(43) Date of publication of application: **01.04.2026**
(21) Application number: 24825824.6
(22) Date of filing: 14.06.2024
(51) Int. Cl.: B29C 64/386, B33Y 50/00

(54) **DATA GENERATION PROGRAM AND DATA GENERATION DEVICE**

(30) Priority: 20.06.2023 JP 2023100476
(71) Applicant: BROTHER KOGYO KABUSHIKI KAISHA, Nagoya-shi, Aichi 467-8561 (JP)
(72) Inventor: NISHIYAMA, Hideshi, Nagoya-shi, Aichi 467-8562 (JP); YAZAWA, Hiroaki, Nagoya-shi, Aichi 467-8562 (JP)
(74) Representative: Prüfer & Partner mbB Patentanwälte · Rechtsanwälte
(86) International application number: PCT/JP2024/021633
(87) International publication number: WO 2024/262421

(57) **Abstract**

A data generation program and data generation device capable of generating data for fabricating three-dimensional products according to a method appropriate for the intended use are provided.

The data generation device obtains three-dimensional data representing a shape of a three-dimensional product (S 1). The data generation device specifies one or more of fabrication methods and one of holding methods (S21). Each of the fabrication methods is a method according to which the three-dimensional product is fabricated with a cutting device configured to perform cutting. Each of the holding methods is a method according to which the three-dimensional product is held in a frame that covers an outside of the three-dimensional product in a first direction. The data generation device generates cutting data based on the three-dimensional data. The cutting data is for fabricating a three-dimensional object with the cutting device. The three-dimensional object includes the three-dimensional product and a holding assembly. A shape of the holding assembly is defined based on the specified one or more of fabrication methods and the specified one of holding methods.

## Description

### [Technical Field]

The present disclosure relates to a data generation program and a data generation device.

### [Background Art]

Methods have been proposed for rapidly producing protypes to evaluate the design specifications and functionality of final products without the use of molds. For example, in a method of fabricating three-dimensional products described in Patent Document 1, first a stereolithography device builds a model by selectively curing a photocurable resin with light based on three-dimensional product model data. Next, a cutting device performs a cutting process on the model based on NC data fabricated from the three-dimensional product model data, thereby producing a prototype made of resin.

### [Citation List]

### [Patent Literature]

[PTL 1] Japanese Patent Application Publication No. 2003-136605

### [Summary of Invention]

### [Technical Problem]

In addition to fabricating and evaluating prototypes made of resin, it is conceivable that times when one wishes to evaluate prototypes fabricated from the material to be used in the final product. However, the method disclosed in Patent Document 1 does not allow for prototypes to be fabricated using the materials to be used in the final products. Therefore, it is desirable to be able to produce prototypes using a method of fabrication appropriate for the intended use.

It is an object of the present invention to provide a data generation program and data generation device capable of generating data for fabricating three-dimensional products according to a method appropriate for the intended use.

### [Solution to Problem]

The data generation program according to first aspect of the present invention that a computer executes includes: a step of obtaining three-dimensional data representing a shape of a three-dimensional product; a step of specifying one or more of fabrication methods and one of holding methods, each of the fabrication methods being a method according to which the three-dimensional product is fabricated with a cutting device configured to perform cutting, each of the holding methods being a method according to which the three-dimensional product is held in a frame that covers an outside of the three-dimensional product in a first direction; and a step of generating cutting data based on the three-dimensional data, the cutting data being for fabricating a three-dimensional object with the cutting device, the three-dimensional object including the three-dimensional product and a holding assembly, a shape of the holding assembly being defined based on the one or more of fabrication methods and the one of holding methods both specified in the step of specifying.

A computer in which the data generation program is executed generates cutting data for fabricating a three-dimensional object with a cutting device. Therefore, the cutting device can cut a workpiece formed of the material to be used in a final product, for example, to produce the three-dimensional object that contains a three-dimensional product formed of the material for the final product. The three-dimensional object includes a holding assembly whose shape is defined based on the fabrication and holding methods specified, and a three-dimensional product. Hence, by specifying the fabrication methods and holding method appropriate for the intended use, data for fabricating the three-dimensional product appropriate for the intended user can be generated.

The data generation device according to second aspect of the present invention includes: means for obtaining three-dimensional data representing a shape of a three-dimensional product; means for specifying one or more of fabrication methods and one of holding methods, each of the fabrication methods being a method according to which the three-dimensional product is fabricated with a cutting device configured to perform cutting, each of the holding methods being a method according to which the three-dimensional product is held in a frame that covers an outside of the three-dimensional product in a first direction; and means for generating cutting data based on the three-dimensional data, the cutting data being for fabricating a three-dimensional object with the cutting device, the three-dimensional object including the three-dimensional product and a holding assembly, a shape of the holding assembly being defined based on the one or more of fabrication methods and the one of holding methods both specified by the means for specifying. According to the second aspect, the effects the same as the first aspect can be obtained.

### [Brief Description of Drawings]

[Fig. 1] Fig. 1 is a diagram illustrating a configuration of a system 9 and an electrical configuration of a data generation device 10.
[Fig. 2] Fig. 2 is a diagram illustrating an overview of operations performed by the system 9 to fabricate three-dimensional objects.
[Fig. 3] Fig. 3 is a diagram illustrating a first example of a settings screen.
[Fig. 4] Fig. 4 is a diagram illustrating a second example of the settings screen.
[Fig. 5] Fig. 5 is a diagram illustrating a third example of the settings screen.
[Fig. 6] Fig. 6 is a diagram illustrating a fourth example of the settings screen.
[Fig. 7] Fig. 7 is a diagram illustrating cutting data generated when a first fabrication method and a double-sided cutting method are set.
[Fig. 8] Fig. 8 is a diagram illustrating cutting data that generated when the first fabrication method and a single-sided cutting method are set.
[Fig. 9] Fig. 9 is a diagram illustrating cutting data generated when a second fabrication method and the double-sided cutting method are set.
[Fig. 10] Fig. 10 is a diagram illustrating cutting data generated when the second fabrication method and the double-sided cutting method are set.
[Fig. 11] Fig. 11 is a diagram illustrating cutting data generated when the second fabrication method and the single-sided cutting method are set.
[Fig. 12] Fig. 12 is a diagram illustrating the cutting data generated when the second fabrication method and the single-sided cutting method are set.
[Fig. 13] Fig. 13 is a flowchart illustrating a data generation process.
[Fig. 14] Fig. 14 is a flowchart illustrating a first configuration process.
[Fig. 15] Fig. 15 is a flowchart illustrating a second configuration process.
[Fig. 16] Fig. 16 is a flowchart illustrating a third configuration process.
[Fig. 17] Fig. 17 is a flowchart illustrating a fourth configuration process.

### [Description of Embodiments]

A three-dimensional modeling system 9 according to one embodiment of the present invention will be described while referring to the drawings. Hereinafter, the three-dimensional modeling system will simply be called the "system 9."

### Overview of the System 9

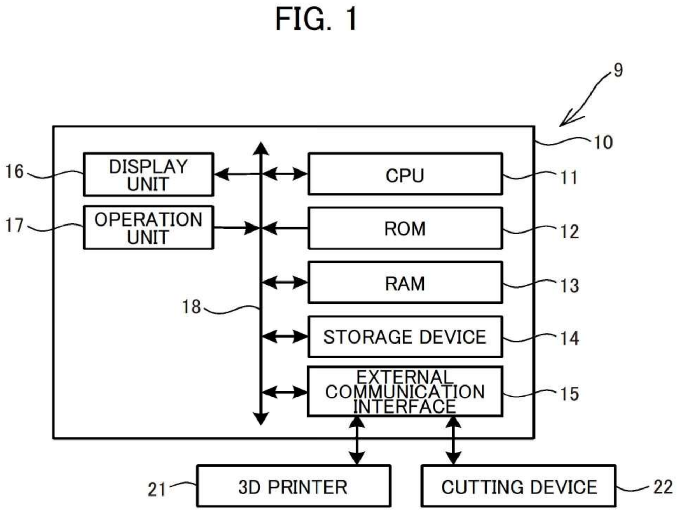

The configuration of the system 9 will be described with reference to Fig. 1. As shown in Fig. 1, the system 9 includes a 3D printer 21, a cutting device 22, and a data generation device 10. The 3D printer 21 is a photopolymer curing device. The 3D printer 21 fabricates a model by curing a photocurable resin with light irradiated based on model data. The modeling method of the 3D printer 21 in the present invention is not limited to photopolymerization but may be another method. For example, the 3D printer 21 may employ any well-known modeling method including powder bed fusion, directed energy deposition, binder jetting, sheet lamination, material extrusion, and material jetting. The cutting device 22 produces cut objects through a cutting process using cutting tools such as blades based on cutting data.

The data generation device 10 is a well-known personal computer. The data generation device 10 generates model data and cutting data from three-dimensional data by executing a data generation program described later. The three-dimensional data is generated by a device, such as a three-dimensional CAD system, a three-dimensional modeler, and a three-dimensional scanner. The three-dimensional data may be generated by the data generation device 10 or an external device. The data generation device 10 includes a CPU 11, a ROM 12, a RAM 13, a storage device 14, an external communication interface 15, a display unit 16, an operation unit 17, and a bus 18.

The CPU 11 controls the data generation device 10. The CPU 11 is electrically connected to the ROM 12, RAM 13, storage device 14, external communication interface 15, display unit 16, and operation unit 17 via the bus 18. The ROM 12 stores a BIOS and other programs executed by the CPU 11. The RAM 13 temporarily stores various data. The storage device 14 is a nonvolatile storage device that stores the data generation program and various settings. The display unit 16 is a device that displays images, such as a liquid crystal display. The operation unit 17 includes at least some of a keyboard, mouse, touchscreen, and joystick, for example. The operation unit 17 outputs signals to the CPU 11 in response to user operations. The external communication interface 15 connects the data generation device 10 to external devices such as the 3D printer 21 and cutting device 22.

The data generation program may be stored in the storage device of an external device connected via the external communication interface 15. The data generation device 10 may receive the data generation program from the external device and store the program in the storage device 14. The data generation program may also be stored on a well-known storage medium that can be connected to the external communication interface 15. The data generation device 10 may read the data generation program from the storage medium and store the program in the storage device 14.

### Fabrication of three-dimensional objects

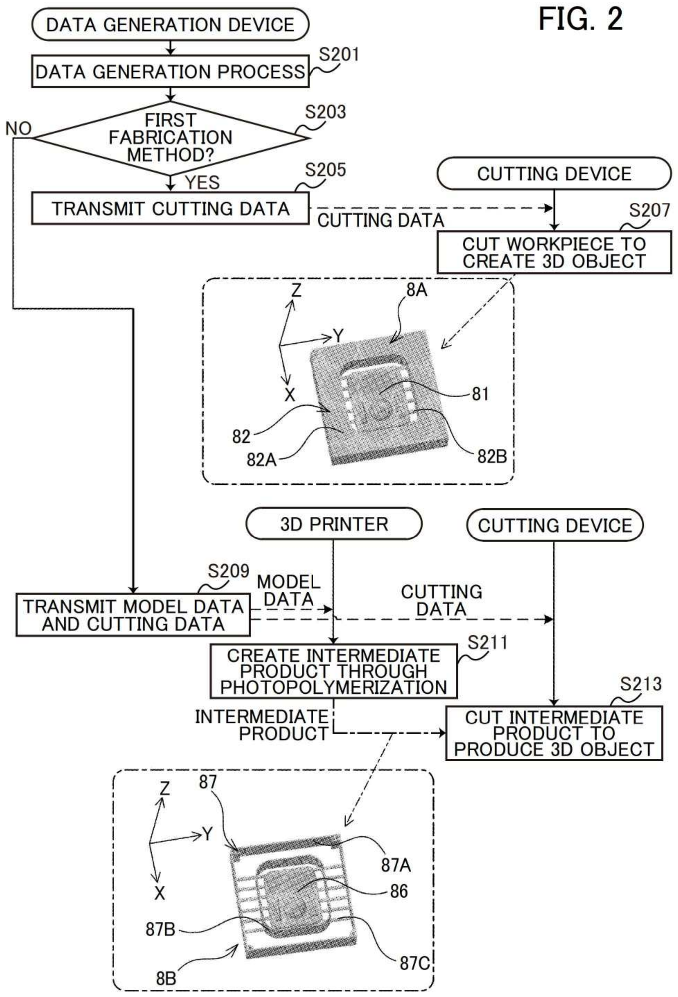

An overview of operations performed by the system 9 to fabricate three-dimensional objects will be described with reference to Fig. 2. The three-dimensional objects are fabricated according to either a first fabrication method using only the cutting device 22 or a second fabrication method using both the 3D printer 21 and the cutting device 22.

When fabricating a three-dimensional object according to the first fabrication method, the data generation device 10 executes a data generation process (S201) to generate cutting data based on three-dimensional data. The data generation device 10 transmits the cutting data generated to the cutting device 22 via the external communication interface 15 (see Fig. 1; S203: YES → S205). The cutting device 22 receives this cutting data from the data generation device 10. Based on the cutting data received in S205, the cutting device 22 cuts the workpiece held in a holding stand to fabricate a three-dimensional object (S207). A three-dimensional object 8A depicts one example of the three-dimensional object fabricated by the cutting device 22.

When fabricating a three-dimensional object according to the second fabrication method, on the other hand, the data generation device 10 executes the data generation process (S201) to generate model data and cutting data based on three-dimensional data. The data generation device 10 transmits the model data generated to the 3D printer 21 via the external communication interface 15 and transmits the cutting data to the cutting device 22 via the external communication interface 15 (S203: NO → S209). The 3D printer 21 receives the model data from the data generation device 10. The cutting device 22 receives the cutting data from the data generation device 10.

Based on the model data received in S209, the 3D printer 21 fabricates an intermediate product from photocurable resin (S211). An intermediate product 8B depicts one example of the intermediate product fabricated by the 3D printer 21. The fabricated intermediate product is removed from the 3D printer 21 and placed in the holding stand of the cutting device 22. The cutting device 22 cuts the intermediate product held in the holding stand and performs surface finishing based on the received cutting data to produce a three-dimensional object (S213).

### Three-dimensional object and Intermediate Product

As shown in Fig. 2, the three-dimensional object 8A has a three-dimensional product 81 and a holding assembly 82. X, Y, and Z directions, which are orthogonal to each other, define the directions of the three-dimensional object 8A. The cutting device 22 fabricates the three-dimensional object 8A by holding the workpiece in the holding stand so that the Z-direction of the workpiece is aligned in the vertical direction and cutting the workpiece by bringing the cutting blade into contact with the workpiece from one side in the Z direction. The near side in Fig. 2 will be the one side in the Z direction, and the far side in Fig. 2 will be the other side in the Z direction.

The three-dimensional product 81 has a three-dimensional shape. The three-dimensional data referenced in the data generation process (S201) specifies the three-dimensional shape of the three-dimensional product 81. The holding assembly 82 holds the three-dimensional product 81 from the outer sides of the three-dimensional product 81 in the X and Y directions. The holding assembly 82 has a frame 82A and connectors 82B. The frame 82A covers the outer sides of the three-dimensional product 81 in the X and Y directions. The frame 82A has a rectangular shape when viewed in the Z direction. The dimension of the frame 82A in the Z direction is shorter than each of the dimensions of the frame 82A in the X and Y directions. A gap of predetermined width is positioned between the three-dimensional product 81 and the frame 82A. The connectors 82B extend across the gap between the three-dimensional product 81 and the frame 82A. The connectors 82B hold the three-dimensional product 81 in the frame 82A.

The intermediate product 8B has a three-dimensional product 86, and a holding assembly 87. The three-dimensional product 86 has the same shape as the three-dimensional product 81 of the three-dimensional object 8A. As in the case of the three-dimensional object 8A, X, Y, and Z directions that are orthogonal to each other define the directions of the intermediate product 8B.

The holding assembly 87 holds the three-dimensional product 86 from the outer sides of the three-dimensional product 86 in the X and Y directions. The holding assembly 87 has a frame 87A, an auxiliary frame 87B, and connectors 87C. The frame 87A is formed of plates assembled into a rectangular shape. The frame 87A has a square shape when viewed in the Z direction. The frame 87A covers the outer sides of the three-dimensional product 86 in the X and Y directions. The auxiliary frame 87B is positioned between the three-dimensional product 86 and the frame 87A. The auxiliary frame 87B is spaced apart from the outer sides of the three-dimensional product 86 in the X and Y directions by a predetermined distance. The connectors 87C extend between the three-dimensional product 86 and the frame 87A. The connectors 87C hold the three-dimensional product 86 and the auxiliary frame 87B in the frame 87A.

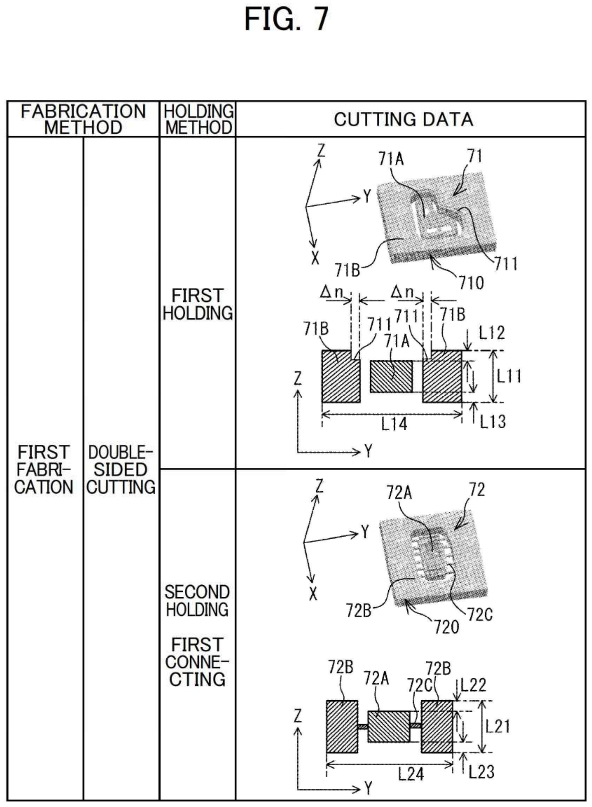

The three-dimensional object 8A and the intermediate product 8B in Fig. 2 are examples and can take other shapes. Specifically, the holding assembly may take other shapes such as the holding assemblies in three-dimensional objects 71-80 and intermediate products 61-65 shown in Figs. 7 through 12. This will be described later in detail.

### Settings Screen

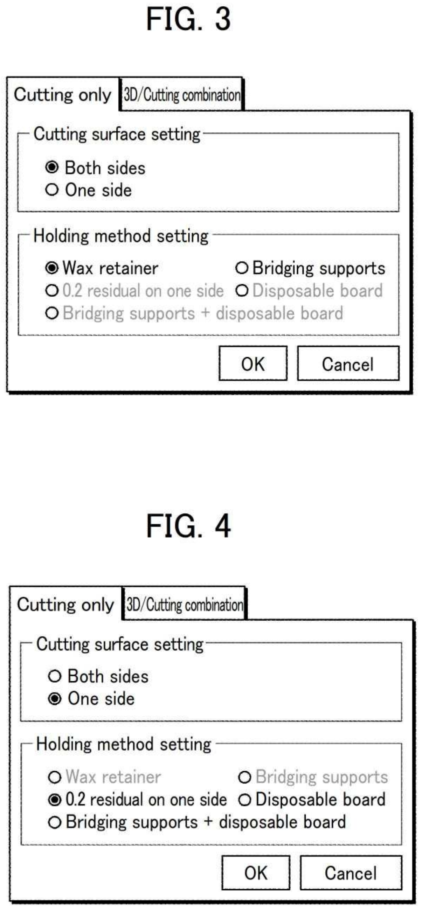

The data generation device 10 displays a settings screen (see Figs. 3 through 6) on the display unit 16 for setting fabrication and holding methods. Settings can be made to indicate which of the first fabrication method and second fabrication method is to be the fabrication method and which sides of the three-dimensional product in the Z direction are to be cut. The holding method can be set to indicate how the three-dimensional product is to be held in the frame during the cutting process by the cutting device 22. The shape of the three-dimensional product produced from the three-dimensional object is specified in the three-dimensional data. The shape of the holding assembly in the three-dimensional object is determined from the fabrication method and the holding method set via the settings screen.

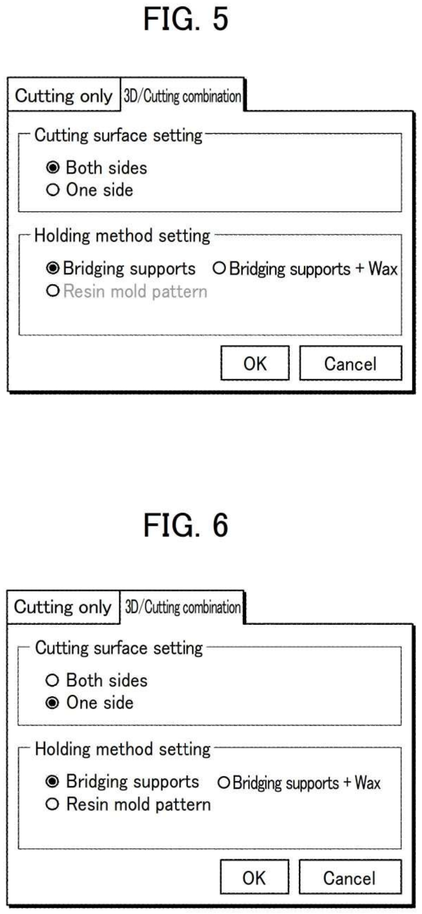

As shown in Figs. 3 through 6, the fabrication method can be set to the first fabrication method or the second fabrication method by switching tabs in the settings screen. The user can set the first fabrication method by switching to the tab labeled "Cutting only" (see Figs. 3 and 4). Alternatively, the user can set the second fabrication method by switching to the tab labeled "3D/Cutting combination" (see Figs. 5 and 6).

The settings screen also includes first radio buttons for setting the surfaces to be cut by the cutting device 22, second radio buttons for setting the holding method of holding the three-dimensional product in the frame, and OK and Cancel buttons. The first radio buttons are located in the box labeled "Cutting surface setting." The second radio buttons are located in the box labeled "Holding method setting."

As shown in Figs. 3 through 6, the first radio buttons include two buttons: "Both sides" and "One side." By selecting the "Both sides" radio button, the user can set a fabrication method for cutting both surfaces of the three-dimensional product on the one side and the other side in the Z direction. By selecting the "One side" radio button, on the other hand, the user can set a fabrication method for cutting one or more surfaces of the three-dimensional product on only the one side in the Z direction.

Hereinafter, the fabrication method according to which both surfaces of the three-dimensional product on the one side and the other side in the Z direction are cut will be called the "double-sided cutting method." The fabrication method according to which one or more surfaces of the three-dimensional product on only the one side in the Z direction is cut will be called the "single-sided cutting method."

The second radio buttons are used for setting the holding method according to which the three-dimensional product is held in the frame. Options among the second radio buttons vary according to the settings for the fabrication method.

The user selects the OK button to accept the fabrication method and holding method set in the settings screen and selects the Cancel button to cancel selections in the settings screen and exit the display.

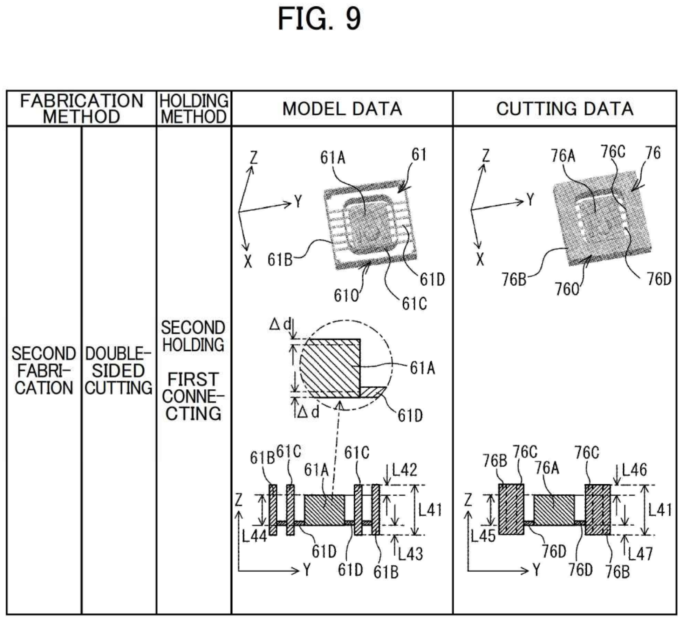

The cutting data and model data generated based on the configured fabrication method and holding method are depicted schematically in Figs. 7 through 12. The locations of photocurable resin to be cured by light irradiated from the 3D printer 21 are indicated in the model data column in Figs. 9 through 12. Therefore, the shape depicted in the model data column corresponds to the shape of the intermediate product produced by the 3D printer 21.

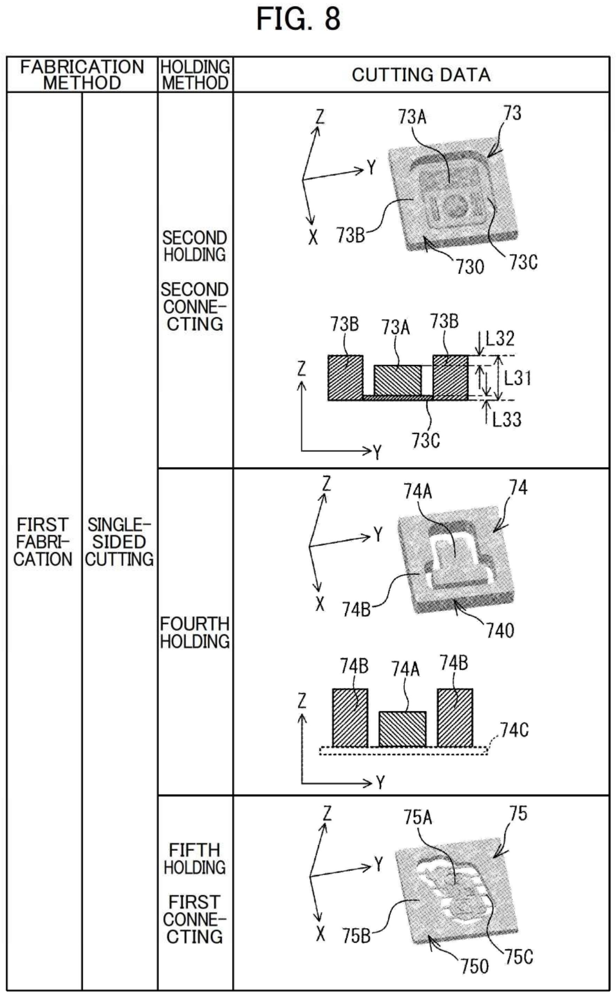

On the other hand, the positions of parts that are not to be cut by the cutting device 22 are indicated in the cutting data column in Figs. 7 through 12. Therefore, when a three-dimensional object is being fabricated from a rectangular parallelepiped workpiece according to the first fabrication method, for example, the three-dimensional object is fabricated in the shape shown in the cutting data column of Figs. 7 and 8. On the other hand, when a three-dimensional object is fabricated from an intermediate product according to the second fabrication method, the shape depicted in the cutting data column of Figs. 9 through 12 may differ from the shape of the three-dimensional object that is actually fabricated.

### First Fabrication Method/Double-Sided Cutting Method

Fig. 3 shows the settings screen when the first fabrication method and the double-sided cutting method are set as the fabrication method. In this case, the second radio buttons include two radio buttons: "Wax retainer" and "Bridging supports."

When the radio button for "Wax retainer" is selected, cutting data is generated for fabricating a three-dimensional object 71 shown in Fig. 7. A holding assembly 710 in the three-dimensional object 71 has no connectors for holding a three-dimensional product 71A in a frame 71B. The user fills the gap between the frame 71B and three-dimensional product 71A with a curing agent and hardens the curing agent. During the cutting process with the cutting device 22, the three-dimensional product 71A is held in the frame 71B by the hardened curing agent. Hereinafter, the "first holding method" will denote a holding method such as that used in the three-dimensional object 71. According to the first holding method, during the cutting process with the cutting device 22, the three-dimensional product 71A is held in the frame 71B by the hardened curing agent filling the gap between the frame 71B and the three-dimensional product 71A.

An end portion of the three-dimensional product 71A on the one side in the Z direction is located farther toward the other side in the Z direction than an end portion of the frame 71B on the one side in the Z direction. An end portion of the three-dimensional product 71A in the Z direction is located farther toward the one side in the Z direction than an end portion of the frame 71B on the other side in the Z direction. A notch 711 is formed in an area on the end portion of the frame 71B on the one side in the Z direction adjacent to the three-dimensional product 71A in the X and Y directions. The distance in the X and Y directions between the three-dimensional product 71A and the frame 71B is greater in areas where the notch 711 is located. The dimension (width) of the notch 711 in the X and Y directions is denoted "width Δn."

A "length L11" refers to the dimension of the frame 71B in the Z direction. A "distance L12" refers to a distance by which the end portion of the frame 71B on the one side in the Z direction and the end portion of the three-dimensional product 71A on the one side in the Z direction are spaced apart from each other in the Z direction. A "distance L13" refers to a distance by which the end portion of the frame 71B on the other side in the Z direction and the end portion of the three-dimensional product 71A on the other side in the Z direction are spaced apart from each other in the Z direction. The distances L12 and L13 are equal and approximately 5 mm, for example. A "length L14" refers to the dimension of the frame 71B in the Y direction.

The shaded portions in the cutting data column denote portions of the three-dimensional object 71 not to be cut with the cutting device 22. Accordingly, the cutting data indicates that regions between the three-dimensional product 71A and the frame 71B are to be cut by the cutting device 22.

When the radio button for "Bridging supports" is selected in Fig. 3, cutting data is generated for fabricating a three-dimensional object 72 shown in Fig. 7. A holding assembly 720 in the three-dimensional object 72 has a frame 72B and connectors 72C. Each connector 72C includes a slender rod-shaped member extending in the Y direction. Each connector 72C extends between a portion of a surface of a three-dimensional product 72A orthogonal to the Y direction and a portion of a surface of the frame 72B crossing the Y direction. The portion of the surface of the three-dimensional product 72A to which each connector 72C is connected excludes end surfaces of the three-dimensional product 72A in the Z direction from the surface of the three-dimensional product 72A crossing the Y direction, and the portion of the frame 72B to which each connector 72C is connected excludes end surfaces of the frame 72B in the Z direction from the surface of the frame 72B crossing the Y direction. The three-dimensional product 72A is held in the frame 72B by the connectors 72C. Unlike the frame 71B of the holding assembly 710, the frame 72B of the holding assembly 720 does not have a notch.

Below, the "second holding method" will be used to indicate a holding method such as that employed in the three-dimensional object 72. The second holding method is a method according to which the three-dimensional product 71A is held in the frame 72B by the connectors 72C, which extend between the three-dimensional product 71A and the frame 72B, during the cutting process by the cutting device 22. Further, the "first connecting method" will denote a connecting method according to which connectors 72C each having the slender rod-shaped member extending in the Y direction connect the surface of the three-dimensional product 71A orthogonal to the Y direction with the surface of the frame 72B crossing the Y direction.

A "length L21" refers to the dimension of the frame 72B in the Z direction. The length L21 is shorter than the length L11 of the three-dimensional object 71. A "distance L22" refers to a distance by which an end portion of the frame 72B on the one side in the Z direction and an end portion of the three-dimensional product 72A on the one side in the Z direction are spaced apart from each other in the Z direction. A "distance L23" refers to a distance by which an end portion of the frame 72B on the other side in the Z direction and an end portion of the three-dimensional product 72A on the other side in the Z direction are spaced apart from each other in the Z direction. The distances L22 and L23 are equal and approximately 2.5 mm, for example. The distance L22 is shorter than the distance L12 in the three-dimensional object 71. The distance L23 is shorter than the distance L13 in the three-dimensional object 71. A "length L24" refers to the dimension of the frame 72B in the Y direction. The length L24 is shorter than the length L14 of the frame 71B in the Y direction, which has the notch 711, by twice the width Δn of the notch 711 in the Y direction.

When the double-sided cutting method is set as the fabrication method, the data generation device 10 generates one side cutting data for cutting the one side in the Z direction, and other side cutting data for cutting the other side in the Z direction as the cutting data. The cutting device 22 executes a cutting process based on the one side cutting data to cut the surface of the workpiece on the one side, and executes a cutting process based on the other side cutting data to cut the surface of the workpiece on the other side.

Further, when the first holding method is set as the holding method, the user first drives the cutting device 22 based on the one side cutting data to execute a cutting process to cut the surface of the workpiece on the one side in the Z direction. Next, the user removes the workpiece from the holding stand. The user fills the gap between the three-dimensional product 71A and frame 71B, which have been cut on only the one side in the Z direction, with a curing agent and hardens the curing agent. In this way, the three-dimensional product 71A of the three-dimensional object 71, which has been cut only on the one side in the Z direction, is held in the frame 71B by the hardened curing agent. Next, the user reverses the orientation of the workpiece in the Z direction. The user then places the workpiece, whose orientation has been inverted, into the holding stand of the cutting device 22. In this state, the user drives the cutting device 22 based on the other side cutting data to execute a cutting process to cut the surface of the workpiece on the other side in the Z direction.

Further, when the second holding method is set as the holding method, the user first drives the cutting device 22 based on the one side cutting data to execute a cutting process to cut the surface of the workpiece on the one side in the Z direction. Next, the user reverses the orientation of the workpiece and places the workpiece in the holding stand. Note that since the three-dimensional product 72A is held in the frame 72B by the connectors 72C, the three-dimensional product 72A does not detach from the frame 72B when its orientation in the Z direction is reversed. The user then drives the cutting device 22 based on the other side cutting data to execute a cutting process to cut the surface of the workpiece on the other side in the Z direction.

### First Fabrication Method/Single-Sided Cutting Method

Fig. 4 shows the settings screen when the first fabrication method and the single-sided cutting method are set as the fabrication method. In this case, the second radio buttons include three buttons: "0.2 residual on one side," "Disposable board," and "Bridging supports + disposable board."

When the radio button for "0.2 residual on one side" is selected, cutting data is generated for fabricating a three-dimensional object 73 shown in Fig. 8. A holding assembly 730 in the three-dimensional object 73 has a frame 73B and a connector 73C. The connector 73C extends between end portions of the frame 73B on the other side in the Z direction. The connector 73C has a planar shape extending in the X and Y directions and connects to the end portions of the frame 73B on the other side in the Z direction that are near a three-dimensional product 73A. The surface of the three-dimensional product 73A on the other side in the Z direction that extends in the X and Y directions connects to the surface of the connector 73C on the one side in the Z direction. An end portion of the three-dimensional product 73A on the one side in the Z direction is located farther toward the other side in the Z direction than an end portion of the frame 73B on the one side in the Z direction. An end portion of the three-dimensional product 73A on the other side in the Z direction is located farther toward the one side in the Z direction than an end portion of the frame 73B on the other side in the Z direction by the dimension of the connector 73C in the Z direction. The dimension of the connector 73C in the Z direction is sufficiently smaller than the dimensions of the three-dimensional product 73A and the frame 73B in the Z direction. Hence, the end portions of the three-dimensional product 73A and frame 73B on the other side in the Z direction are approximately flush with each other.

The method of holding the three-dimensional product 73A in the frame 73B is the "second holding method" because the three-dimensional product 73A is connected to and held in the frame 73B by the connector 73C extending between the three-dimensional product 73A and the frame 73B. Further, the "second connecting method" will denote a connecting method such as that used in the three-dimensional object 73. According to the second connecting method, the three-dimensional product 73A is connected to the frame 73B by the connector 73C, which extends in a planar shape from the frame 73B in the X and Y directions.

A "length L31" refers to the dimension of the frame 73B in the Z direction. The length L31 is shorter than the length L11 of the three-dimensional object 71 (see Fig. 7) and the length L21 of the three-dimensional object 72 (see Fig. 7). A "distance L32 refers to a distance by which an end portion of the frame 73B on the one side in the Z direction and an end portion of the three-dimensional product 73A on the one side in the Z direction are spaced apart from each other in the Z direction. The distance L32 is approximately 0.1 mm, for example. The distance L32 is shorter than the distance L12 in the three-dimensional object 71 (see Fig. 7) and the distance L22 in the three-dimensional object 72 (see Fig. 7). A "distance L33" refers to a distance by which an end portion of the frame 73B on the other side in the Z direction and an end portion of the three-dimensional product 73A on the other side in the Z direction are spaced apart from each other. The distance L33 is approximately 0 and is shorter than the distance L32.

When the radio button for "Disposable board" is selected in Fig. 4, cutting data is generated for fabricating a three-dimensional object 74 shown in Fig. 8. A holding assembly 740 in the three-dimensional object 74 has no connectors for holding a three-dimensional product 74A in a frame 73B. The user bonds a disposable board 74C to end surfaces of the three-dimensional product 74A and the frame 74B on the other side in the Z direction so that the disposable board 74C holds the three-dimensional product 74A in the frame 74B. Hereinafter, the "fourth holding method" will denote a holding method such as that used in the three-dimensional object 74. According to the fourth holding method, during the cutting process with the cutting device 22, the three-dimensional product 74A is held in the frame 74B by the disposable board 74C, which is bonded to both the frame and the three-dimensional product.

The shaded areas in the cutting data column denote portions of the three-dimensional object 74 that are not to be cut with the cutting device 22. Accordingly, the cutting data indicates that regions between the three-dimensional product 74A and the frame 74B are to be cut by the cutting device 22.

When the radio button for "Bridging supports + disposable board" is selected in Fig. 4, cutting data is generated for fabricating a three-dimensional object 75 shown in Fig. 8. A holding assembly 750 in the three-dimensional object 75 has a frame 75B and connectors 75C. Each connector 75C includes a slender rod-shaped member extending in the Y direction. The connectors 75C hold a three-dimensional product 75A in the frame 75B. The user also bonds a disposable board (not shown) to end surfaces of the three-dimensional product 75A and the frame 75B on the other side in the Z direction so that the disposable board holds the three-dimensional product 75A in the frame 75B. Thus, the three-dimensional product 75A is held in the frame 75B by the connectors 75C and the disposable board.

Below, the "fifth holding method" will denote a holding method such as that used in the three-dimensional object 75. The fifth holding method is a method according to which the three-dimensional product 75A is held in the frame 75B by the connectors 75C and the disposable board. The connecting method is the "first connecting method" because the three-dimensional product 75A is connected to the frame 75B by connectors 75C each having slender rod-shaped member extending in the Y direction.

When the single-sided cutting method is set as the fabrication method, the data generation device 10 generates one side cutting data for cutting the one side in the Z direction as the cutting data. The cutting device 22 fabricates each of the three-dimensional objects 73-75 by executing a cutting process based on the corresponding cutting data for cutting the workpiece on the one side.

### Second Fabrication Method/Double-Sided Cutting Method

Fig. 5 shows the settings screen when the second fabrication method and the double-sided cutting method are set as the fabrication method. In this case, the second radio buttons include two buttons: "Bridging supports" and "Bridging supports + Wax."

When the radio button for "Bridging supports" is selected in Fig. 5, model data is generated for fabricating an intermediate product 61 and cutting data is generated for fabricating a three-dimensional object 76, as shown in Fig. 9.

The intermediate product 61 includes a three-dimensional product 61A and a holding assembly 610. The three-dimensional product 61A has a shape corresponding to a three-dimensional product 76A of the three-dimensional object 76, and the shape of the three-dimensional product 61A matches a shape obtained by increasing a thickness of a surface of the three-dimensional product 76A on the one side in the Z direction by Δd and increasing a thickness of a surface of the three-dimensional product 76A on the other side in the Z direction by Δd.

The holding assembly 610 has a frame 61B, an auxiliary frame 61C, and connectors 61D. The connectors 61D comprise a plurality of slender rod-shaped members extending in the Y direction. The connectors 61D extend between a surface of the three-dimensional product 61A orthogonal to the Y direction and a surface of the frame 61B that crosses the Y direction. Each connector 61D connects a portion on a surface of the frame 61B orthogonal to the Y direction to the edge on the other end of the Z direction of surfaces on the 3D product 61A that crosses the Y direction. Here, the portion of the surface of the frame 61B to which each connector 61D is connected excludes end portions of the frame 61B in the Z direction from the surface of the frame 61B orthogonal to the Y direction. The end portion of the three-dimensional product 61A located on the one side in the Z direction is located farther toward the other side in the Z direction than the end portion of the frame 61B on the one side in the Z direction. The end portion of the three-dimensional product 61A on the other side in the Z direction is located farther toward the one side in the Z direction than the end portion of the frame 61B on the other side in the Z direction. The connectors 61D hold the three-dimensional product 61A in the frame 61B.

The auxiliary frame 61C is arranged between the three-dimensional product 61A and the frame 61B. The auxiliary frame 61C is spaced apart from the outer sides of the three-dimensional product 61A in the X and Y directions by a predetermined distance. The dimension of the auxiliary frame 61C in the Z direction is the same as the dimension of the frame 61B in the Z direction. The connectors 61D extend from the frame 61B to the three-dimensional product 61A and connect to the auxiliary frame 61C at a midpoint. The auxiliary frame 61C is held in the frame 61B by the connectors 61D.

A "length L41" refers to the dimension in the Z direction of the frame 61B in the intermediate product 61. A "distance L42" refers to a distance by which the end portion of the frame 61B on the one side in the Z direction and the end portion of the three-dimensional product 61A on the one side in the Z direction are spaced apart from each other in the Z direction. A "distance L43" refers to a distance by which the end portion of the frame 61B on the other side in the Z direction and the end portion of the three-dimensional product 61A on the other side in the Z direction are spaced apart from each other in the Z direction. The distances L42 and L43 are equal and approximately 2.5 mm, for example. A "thickness L44" refers to the thickness of the three-dimensional product 61A in the Z direction.

The three-dimensional object 76 is fabricated by performing surface finishing in a cutting process on the intermediate product 61. The three-dimensional product 76A and a holding assembly 760 of the three-dimensional object 76 correspond to the three-dimensional product 61A and holding assembly 610 of the intermediate product 61, respectively.

The three-dimensional product 76A of the three-dimensional object 76 is produced by using the cutting device 22 to cut the surfaces of the three-dimensional product 61A in the intermediate product 61 by Δd on both the one side and the other side in the Z direction.

The shaded portions in the cutting data column denote portions of the three-dimensional object 76 that are not to be cut with the cutting device 22. In other words, when performing a cutting process based on the cutting data, the cutting device 22 does not cut the areas between a frame 76B and an auxiliary frame 76C of the holding assembly 760.

The method of holding the three-dimensional product 76A in the frame 76B is the "second holding method" because the three-dimensional product 76A is connected to and held in the frame 76B by the connectors 76D that extend between the three-dimensional product 76A and the frame 76B. Further, the connecting method is the "first connecting method" because the three-dimensional product 76A is connected to the frame 76B by the connectors 76D each including the slender rod-shaped member extending in the Y direction.

The dimension in the Z direction of the frame 76B in the three-dimensional object 76 is the same as the length L41 in the Z direction of the frame 61B in the intermediate product 61. A "distance L46" refers to a distance in the Z direction by which the end portion of the frame 76B on the one side in the Z direction and the end portion of the three-dimensional product 76A on the one side in the Z direction are spaced apart from each other in the Z direction. A "distance L47" refers to a distance by which the end portion of the frame 76B on the other side in the Z direction and the end portion of the three-dimensional product 76A on the other side in the Z direction are spaced apart from each other in the Z direction. The distances L46 and L47 are the same. The distances L46 and L47 are each greater than the respective distances L42 and L43 in the intermediate product 61 by Δd. A "thickness L45" refers to the thickness of the three-dimensional product 76A in the Z direction. The thickness L45 is smaller than the thickness L44 of the three-dimensional product 61A in the intermediate product 61 by 2 × Δd.

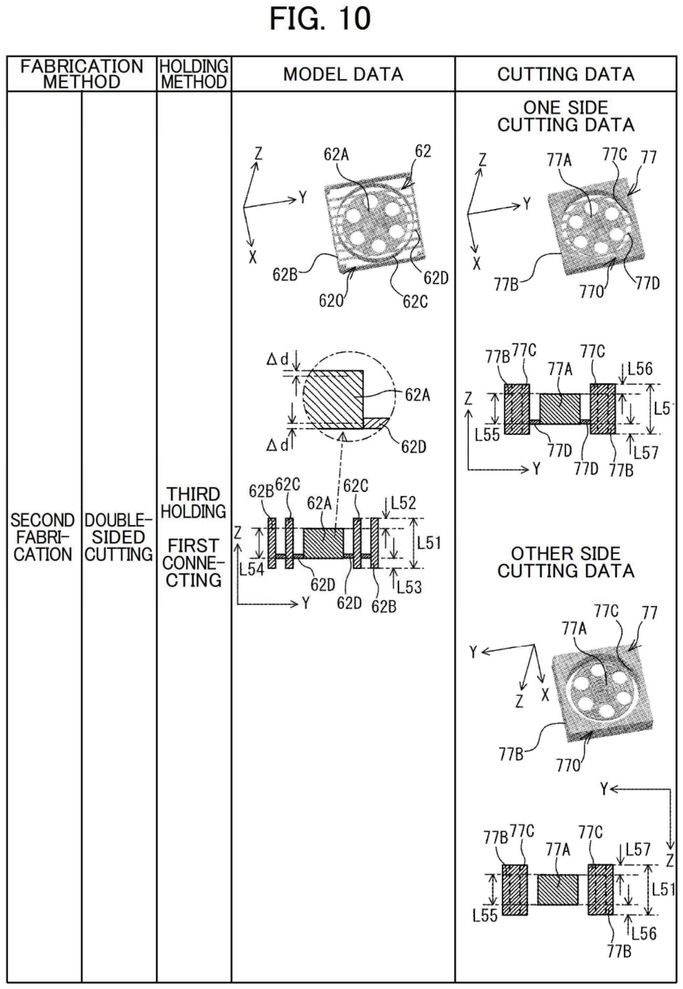

When the radio button for "Bridging supports + Wax retainer" is selected in Fig. 5, model data is generated for fabricating an intermediate product 62 and cutting data is generated for fabricating a three-dimensional object 77, as illustrated in Fig. 10.

The intermediate product 62 includes a three-dimensional product 62A and a holding assembly 620. The three-dimensional product 62A has a shape corresponding to a three-dimensional product 77A of the three-dimensional object 77, and the shape of the three-dimensional product 62A matches a shape obtained by increasing a thickness of a surface of the three-dimensional product 77A in the Z direction on each of the one side and the other side in the Z direction by Δd.

The holding assembly 620 has a frame 62B, an auxiliary frame 62C, and connectors 62D. The frame 62B, auxiliary frame 62C, and connectors 62D correspond to the frame 62B, auxiliary frame 62C, and connectors 62D in the holding assembly 610 of the intermediate product 61.

A "length L51" refers to the dimension in the Z direction of the frame 62B in the intermediate product 62. A "distance L52" refers to a distance by which an end portion of the frame 62B on the one side in the Z direction and an end portion of the three-dimensional product 62A on the one side in the Z direction are spaced apart from each other in the Z direction. A "distance L53" refers to the distance by which an end portion of the frame 62B on the other side in the Z direction and an end portion of the three-dimensional product 62A on the other side in the Z direction are spaced apart from each other in the Z direction. The distances L52 and L53 are the same and approximately 5 mm, for example. A "thickness L54" refers to the thickness of the three-dimensional product 62A in the Z direction.

The three-dimensional object 77 is fabricated through surface finishing performed in a cutting process on the intermediate product 62. The three-dimensional product 77A and a holding assembly 770 of the three-dimensional object 77 correspond to the three-dimensional product 62A and the holding assembly 620 of the intermediate product 62. A frame 77B, an auxiliary frame 77C, and connectors 77D of the holding assembly 770 correspond to the frame 62B, auxiliary frame 62C, and connectors 62D of the holding assembly 620.

The three-dimensional object 77 differs from the three-dimensional object 76 in that the user fills the gap between the auxiliary frame 77C and the three-dimensional product 77A with a curing agent. The three-dimensional product 77A is held in the frame 77B by both the connectors 77D and the hardened curing agent. Below, the "third holding method" will denote a holding method such as that used in the three-dimensional object 77. According to the third holding method, the three-dimensional product 77A is held in the frame 77B by both the connectors 77D and the hardened curing agent during the cutting process by the cutting device 22. The connecting method is the "first connecting method" since the three-dimensional product 76A is connected to the frame 76B by the connectors 77D each including the slender rod-shaped member extending in the Y direction.

The dimension in the Z direction of the frame 77B in the three-dimensional object 77 is equal to the length L51 in the Z direction of the frame 62B in the intermediate product 62. A "distance L56" refers to a distance by which the end portion of the frame 77B on the one side in the Z direction and the end portion of the three-dimensional product 77A on the one side in the Z direction are spaced apart from each other in the Z direction. A "distance L57" refers to a distance by which the end portion of the frame 77B on the other end in the Z direction and the end portion of the three-dimensional product 77A on the other end in the Z direction are spaced apart from each other in the Z direction. The distances L56 and L57 are the same. The distances L56 and L57 are each greater than the respective distances L52 and L53 in the intermediate product 62 by Δd. A "thickness L55" refers to the thickness of the three-dimensional product 77A in the Z direction. The thickness L55 is smaller than the thickness L54 of the three-dimensional product 62A in the intermediate product 62 by 2 × Δd.

When the double-sided cutting method is set as the fabrication method, the data generation device 10 generates one side cutting data and other side cutting data as the cutting data. In the cutting processes on the intermediate product produced by the 3D printer 21, the cutting device 22 executes a cutting process on the one side in the Z direction based on the one side cutting data and executes a cutting process on the other side in the Z direction based on the other side cutting data.

Further, when the second holding method is set as the holding method, the user first drives the cutting device 22 based on the one side cutting data to execute a cutting process on the intermediate product 61 shown in Fig. 9 for the one side in the Z direction. Next, the user removes the intermediate product 61 from the holding stand, reverses the orientation of the intermediate product 61 in the Z direction, and places the inverted intermediate product 61 into the holding stand of the cutting device 22. In this state, the user drives the cutting device 22 based on the other side cutting data to execute a cutting process on the other side of the intermediate product 61 in the Z direction. This process produces a three-dimensional object 76 that has been cut on both sides in the Z direction. As shown in Fig. 9, the three-dimensional object 76 includes connectors 76D extending between the three-dimensional product 76A and the auxiliary frame 76C.

When the third holding method has set as the holding method, the user removes the intermediate product 62 from the holding stand after cutting only the one side in the Z direction, then fills the gap between the three-dimensional product 77A formed by cutting and the auxiliary frame 77C with a curing agent and hardens the curing agent, as illustrated in Fig. 10. As a result, the three-dimensional product 77A is held in the auxiliary frame 77C by the connectors 77D and the hardened curing agent. Next, the user reverses the orientation of the intermediate product 62 in the Z direction and places the intermediate product 62 back in the holding stand of the cutting device 22. In this state, the user drives the cutting device 22 based on the other side cutting data to perform a cutting process on the other side of the intermediate product 62 in the Z direction. This produces the three-dimensional object 77 that has been cut on both sides in the Z direction.

Here, the conditions of the cutting region in areas excluding the three-dimensional product differ between the one side cutting data and the other side cutting data when the third holding method has been set as the holding method. As shown in Fig. 10, the connectors 77D arranged in the area between the three-dimensional product 77A and the auxiliary frame 77C are outside the target area for cutting in the one side cutting data. Therefore, the connectors 77D are maintained in the area between the three-dimensional product 77A and the auxiliary frame 77C even after the cutting device 22 has performed cutting based on the one side cutting data. On the other hand, the entire area between the three-dimensional product 77A and the auxiliary frame 77C is a target area for cutting in the other side cutting data. Therefore, the connectors 77D are cut from the area between the three-dimensional product 77A and the auxiliary frame 77C when the cutting device 22 performs cutting based on the other side cutting data. As a result, the three-dimensional product 77A becomes detached from the holding assembly 770 after the three-dimensional object 77 has been cut on both sides in the Z direction.

### Second Fabrication Method/Single-Sided Cutting Method

Fig. 6 shows the settings screen when the second fabrication method and the single-sided cutting method are set as the fabrication method. In this case, the second radio buttons include three buttons: "Bridging supports," "Bridging supports + Wax," and "Resin mold pattern."

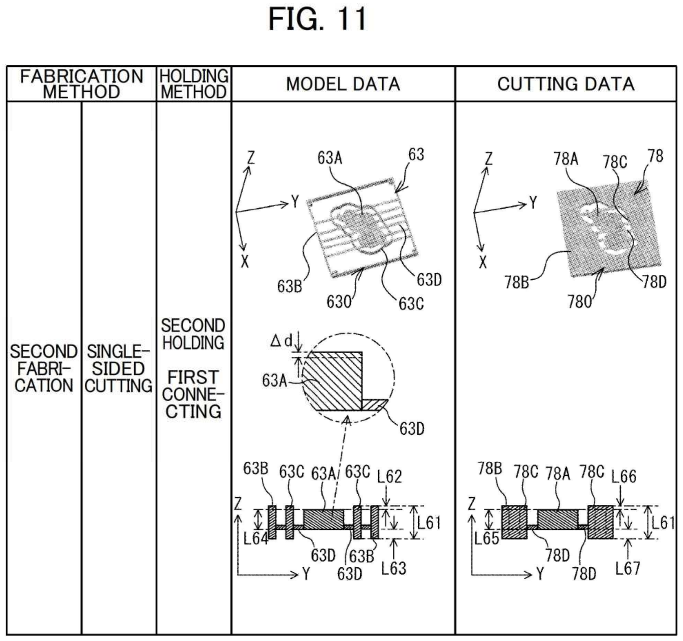

When the radio button for "Bridging supports" is selected in Fig. 6, model data is generated for fabricating an intermediate product 63 and cutting data is generated for fabricating a three-dimensional object 78, as illustrated in Fig. 11.

The intermediate product 63 includes a three-dimensional product 63A and a holding assembly 630. The three-dimensional product 63A has a shape that corresponds to a three-dimensional product 78A of the three-dimensional object 78, and the shape of the three-dimensional product 63A matches a shape obtained by increasing a thickness of a surface of the three-dimensional product 78A in the Z direction on the one side in the Z direction by Δd.

The holding assembly 630 has a frame 63B, an auxiliary frame 63C, and connectors 63D. The holding assembly 630 corresponds to the holding assembly 610 of the intermediate product 61 (see Fig. 9). The frame 63B, auxiliary frame 63C, and connectors 63D respectively correspond to the frame 61B, auxiliary frame 61C, and connectors 61D of the holding assembly 610 (see Fig. 9).

A "length L61" refers to the dimension in the Z direction of the frame 63B in the intermediate product 63. A "distance L62." refers to a distance by which the end portion of the frame 63B on the one side in the Z direction and the end portion of the three-dimensional product 63A on the one side in the Z direction are spaced apart from each other in the Z direction. A "distance L63." refers to a distance by which the end portion of the frame 63B on the other side in the Z direction and the end portion of the three-dimensional product 63A on the other side in the Z direction are spaced apart from each other in the Z direction. The distance L62 is approximately 1 mm, for example. The distance L63 is approximately 2.5 mm, for example. The distance L63 is greater than the distance L62. The distance L62 is shorter than the distance L42 in the intermediate product 61. The distance L63 is equal to the distance L43 in the intermediate product 61. A "thickness L64" refers to the thickness of the three-dimensional product 63A in the Z direction.

The three-dimensional object 78 is fabricated through surface finishing performed in a cutting process on the intermediate product 63. The three-dimensional product 78A and a holding assembly 780 of the three-dimensional object 78 correspond to the three-dimensional product 63A and the holding assembly 630 of the intermediate product 63, respectively. A frame 78B, an auxiliary frame 78C, and connectors 78D of the holding assembly 780 respectively correspond to the frame 63B, auxiliary frame 63C, and connectors 63D of the holding assembly 630.

The three-dimensional product 78A of the three-dimensional object 78 is produced using the cutting device 22 to cut Δd worth from the surface of the three-dimensional product 63A on the one side of the intermediate product 63 in the Z direction.

The method of holding the three-dimensional product 78A in the frame 78B is the "second holding method" because the three-dimensional product 78A is connected to the frame 78B by the connectors 78D, which extend between the three-dimensional product 78A and the frame 78B. Further, the connecting method is the "first connecting method" since the three-dimensional product 78A is connected to the frame 78B by the connectors 78D each including a slender rod-shaped member extending in the Y direction.

The dimension in the Z direction of the frame 78B in the three-dimensional object 78 is equal to the length L61 in the Z direction of the frame 63B in the intermediate product 63. A "distance L66" refers to a distance by which an end of the frame 78B on the one side in the Z direction and an end of the three-dimensional product 78A on the one side in the Z direction are spaced apart from each other in the Z direction. A "distance L67" refers to a distance by which an end of the frame 78B on the other side in the Z direction and an end of the three-dimensional product 78A on the other side in the Z direction are spaced apart from each other in the Z direction. The distance L66 is greater than the distance L62 in the intermediate product 63 by Δd. The distance L67 is approximately 2.5 mm, for example. The distance L67 is greater than the distance L66. A "thickness L65" refers to the thickness of the three-dimensional product 63A in the Z direction. The thickness L65 is smaller than the thickness L64 of the three-dimensional product 63A in the intermediate product 63 by Δd.

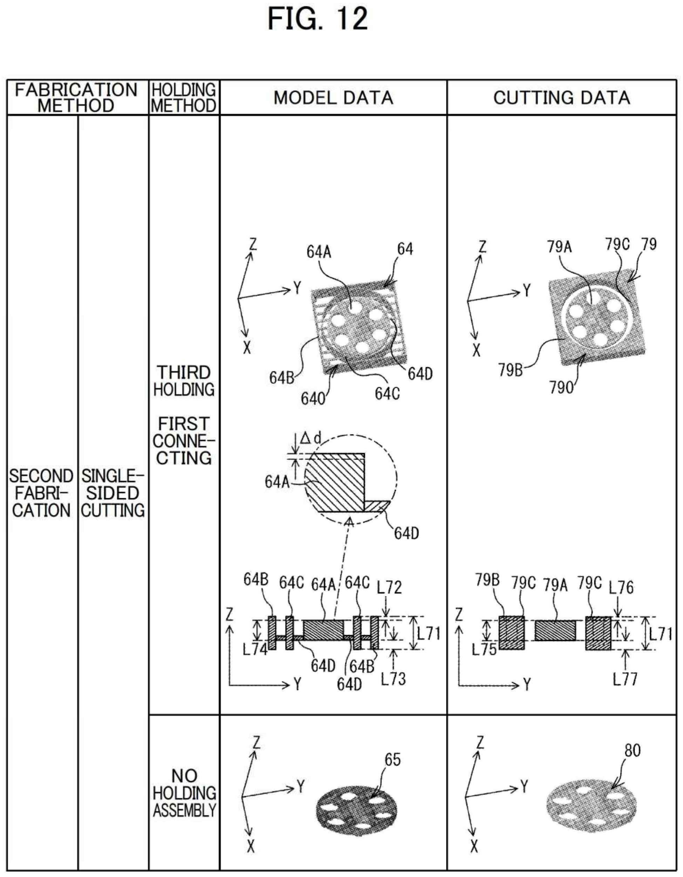

When the radio button for "Bridging supports + Wax retainer" is selected in Fig. 6, model data is generated for fabricating an intermediate product 64 and cutting data is generated for fabricating a three-dimensional object 79, as illustrated in Fig. 12.

The intermediate product 64 includes a three-dimensional product 64A and a holding assembly 640. The three-dimensional product 64A has a shape that corresponds to a three-dimensional product 79A of the three-dimensional object 79, and the shape of three-dimensional product 64A matches a shape obtained by increasing a thickness of a surface of the three-dimensional product 79A on the one side in the Z direction by Δd.

The holding assembly 640 has a frame 64B, an auxiliary frame 64C, and connectors 64D. The holding assembly 640 corresponds to the holding assembly 620 in the intermediate product 62 (see Fig. 10). The frame 64B, auxiliary frame 64C, and connectors 64D respectively correspond to the frame 62B, auxiliary frame 62C, and connectors 62D in the holding assembly 620 of the intermediate product 63 (see Fig. 10).

A "length L71" refers to the dimension of the frame 64B in the Z direction. A "distance L72" refers to a distance by which an end portion of the frame 64B on the one side in the Z direction and an end portion of the three-dimensional product 64A on the one side in the Z direction are spaced apart from each other in the Z direction. A "distance L73" refers to a distance by which an end portion of the frame 64B on the other side in the Z direction and an end portion of the three-dimensional product 64A on the other side in the Z direction are spaced apart from each other in the Z direction. The distance L73 is greater than the distance L72. A "thickness L74" refers to the thickness in the Z direction of the three-dimensional product 64A in the intermediate product 64.

The three-dimensional object 79 is fabricated through surface finishing performed in a cutting process on the intermediate product 64. The three-dimensional product 79A and a holding assembly 790 of the three-dimensional object 79 correspond to the three-dimensional product 64A and the holding assembly 640 of the intermediate product 64, respectively. A frame 79B and an auxiliary frame 79C of the holding assembly 790 correspond to the frame 64B and auxiliary frame 64C of the holding assembly 640, respectively. Note that portions corresponding to the connectors 64D of the holding assembly 640 are cut by the cutting device 22 and removed.

The method of holding the three-dimensional product 79A in the frame 79B is the "third holding method" since the three-dimensional product 79A is held in the frame 79B by both connectors and a hardened curing agent during the cutting process with the cutting device 22. Further, the connecting method is the "first connecting method" since the three-dimensional product 79A is connected to the frame 79B by connectors each including a slender rod-shaped member extending in the Y direction during the cutting process by the cutting device 22.

The dimension in the Z direction of the frame 79B in the three-dimensional object 79 is equal to the length L71 in the Z direction of the frame 64B in the intermediate product 64. A "distance L76" refers to a distance by which an end portion of the frame 79B on the one side in the Z direction and an end portion of the three-dimensional product 79A on the one side in the Z direction are spaced apart from each other in the Z direction. A "distance L77" refers to a distance by which an end portion of the frame 79B on the other side in the Z direction and an end portion of the three-dimensional product 79A on the other side in the Z direction are spaced apart from each other in the Z direction. The distance L77 is greater than the distance L76. The distance L76 is greater than the distance L72 in the intermediate product 64 by Δd. A "thickness L75" refers to the thickness of the three-dimensional product 79A in the Z direction. The thickness L75 is smaller than the thickness L74 of the three-dimensional product 64A in the intermediate product 64 by Δd.

When the radio button for "Resin mold pattern" is selected in Fig. 6, model data is generated for fabricating an intermediate product 65 and cutting data is generated for fabricating a three-dimensional object 80, as illustrated in Fig. 12.

The intermediate product 65 has no holding assembly and is configured solely of a three-dimensional product. The thickness of this three-dimensional product in the intermediate product 65 in the Z direction is greater than the thickness of a three-dimensional product in the three-dimensional object 80 by Δd.

The three-dimensional object 80 has no holding assembly and is configured solely of a three-dimensional product 80A. The thickness of the three-dimensional product 80A in the Z direction is smaller than the thickness of the intermediate product 65 in the Z direction by Δd. In other words, the cutting device 22 fabricates the three-dimensional object 80 by cutting the surface of the intermediate product 65 on the one side in the Z direction by Δd.

When the single-sided cutting method is set as the fabrication method, the data generation device 10 generates one side cutting data for cutting the one side in the Z direction as the cutting data. The cutting device 22 fabricates the three-dimensional object by executing a cutting process based on this cutting data to cut the one side of the intermediate product.

Conditions for cutting areas in parts excluding the three-dimensional product differ between cutting data generated when the second holding method is set as the holding method (see Fig. 11) and cutting data generated when the third holding method is set as the holding method (see Fig. 12). As shown in Fig. 11, when the second holding method is set, the connectors 78D arranged in the area between the three-dimensional product 78A and the auxiliary frame 78C are outside the target area for cutting in the cutting data. Therefore, the connectors 78D are maintained in the area between the three-dimensional product 78A and auxiliary frame 78C when the cutting device 22 performs cutting based on the cutting data. On the other hand, the entire area between the three-dimensional product 79A and auxiliary frame 79C becomes the target area for cutting in the cutting data when the third holding method is set, as illustrated in Fig. 12. Accordingly, when the cutting device 22 performs cutting based on this cutting data, connectors are cut from the area between the three-dimensional product 79A and auxiliary frame 79C. As a result, the three-dimensional product 79A becomes detached from the holding assembly 790 in the three-dimensional object 79.

### Data Generation Process

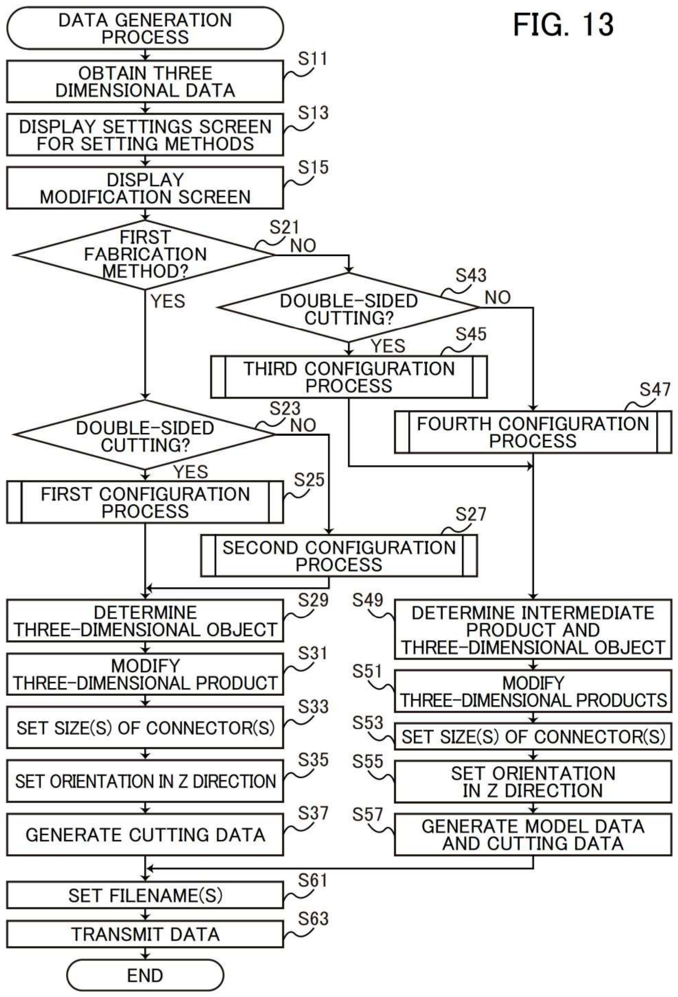

A data generation process (see S201 of Fig. 2) executed by the CPU 11 of the data generation device 10 will be described with reference to Figs. 13 through 17. The CPU 11 starts the data generation process in response to detecting an operation for initiating the generation of cutting data or both model data and cutting data via the operation unit 17. To start the data generation process, the CPU 11 reads the data generation program stored in the storage device 14 into the RAM 13 and executes the program.

As shown in Fig. 13, the CPU 11 first obtains three-dimensional data specifying the shape of the three-dimensional product (S11). The CPU 11 may obtain the three-dimensional data by reading three-dimensional data stored in the storage device 14 or by receiving three-dimensional data transmitted from an external device via the external communication interface 15.

The CPU 11 displays a settings screen (see Figs. 3 through 6) on the display unit 16 for setting the fabrication method and the holding method (S13). The process advances to S15 once the CPU 11 detects an input operation in the settings screen displayed on the display unit 16 for selecting the "OK" button. Next, the CPU 11 displays a modification screen on the display unit 16 for changing modifiable items related to the three-dimensional data obtained in the process of S11 (S15). The modifiable items include (1) "Thickness of three-dimensional product," (2) "Formation of holes," (3) "Size of connectors," and (4) "Orientation of three-dimensional product."

The modifiable item (1) "Thickness of three-dimensional product" is set for partially modifying the thickness of the three-dimensional product in the Z direction. A portion of the three-dimensional product whose thickness is to be modified is specified by a pointer. Through operations on the operation unit 17, the pointer is moved to specify a specific surface of the three-dimensional product displayed in the modification screen, for example. The amount of increase or decrease in thickness is specified by directly inputting via the operation unit 17 a numerical value representing the amount of increase or decrease in thickness. For example, a positive value (units: mm) is inputted when increasing the thickness and a negative value (units: mm) is inputted when decreasing the thickness.

The modifiable item (2) "Formation of holes" is set for forming, in the three-dimensional product, one or more holes required for removing air, in a case where the three-dimensional product being fabricated is a vacuum forming mold. For example, positions for forming one or more holes in a three-dimensional product displayed in the modification screen are specified with a pointer, which is moved through operations on the operation unit 17. The number of holes that can be specified may be one or more.

The modifiable item (3) "Size of connectors" is set for individually specifying the cross-sectional diameter for each of a plurality of rod-shaped members configuring the connectors, in a case where the three-dimensional product is to be connected to the frame according to the first connecting method. The size of each connector is specified by directly inputting a value for the cross-sectional diameter of the corresponding rod-shaped member (units: mm) through operations on the operation unit 17, for example.

The modifiable item (4) "Orientation of three-dimensional product" is set when changing the orientation of the three-dimensional product in the Z direction. For example, the three-dimensional product displayed in the modification screen is oriented such that the Z-axis among the reference axes (X-axis, Y-axis, and Z-axis) for the various coordinate information in the three-dimensional data is aligned in the vertical direction. When the orientation of this three-dimensional product is modified through operations on the operation unit 17, the vertical orientation of the three-dimensional product after this modification is designated as the modified Z-axis in the reference axes. Information for each coordinate in the three-dimensional data is adjusted based on the modified vertical orientation of the three-dimensional product.

After the CPU 11 displays the modification screen on the display unit 16, the process advances to S21 when the CPU 11 detects input operations for setting at least one of the modifiable items (1)-(4) and for inputting modification content.

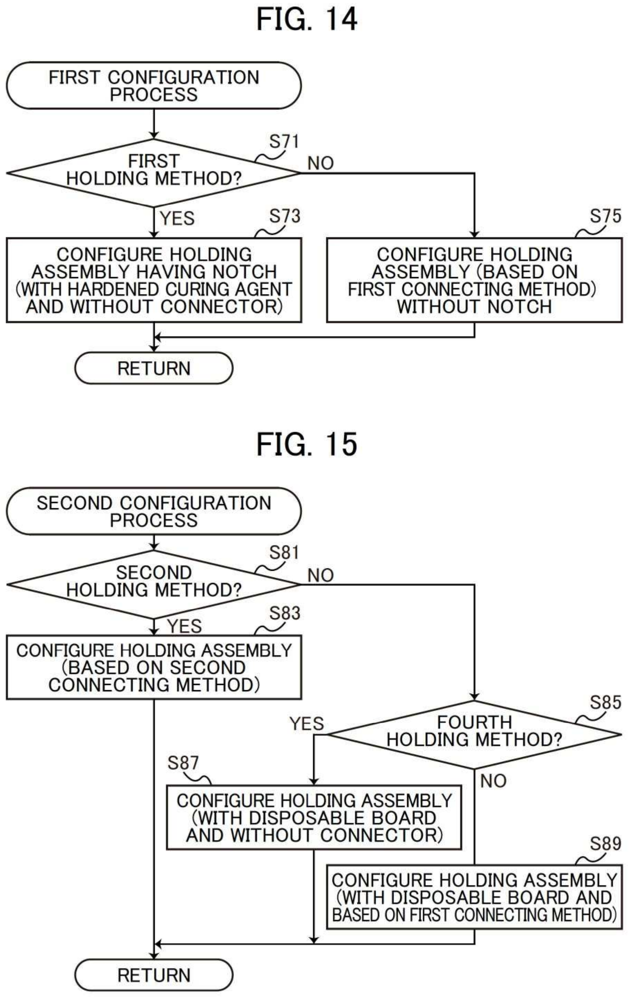

When the fabrication method is set to the first fabrication method (S21: YES) and the double-sided cutting method (S23: YES), the CPU 11 executes a first configuration process described later (see Fig. 14) to generate cutting data for one of the three-dimensional objects 71 and 72 shown in Fig. 7 (S25). After the CPU 11 completes the first configuration process, the process advances to S29. When the fabrication method is set to the first fabrication method (S21: YES) and the single-sided cutting method (S23: NO), the CPU 11 executes a second configuration process described later (see Fig. 15) to generate cutting data for one of the three-dimensional objects 73-75 shown in Fig. 8 (S27). After the CPU 11 completes the second configuration process, the process advances to S29.

In the first configuration process shown in Fig. 14, when the holding method is set to the first holding method (S71: YES), the CPU 11 performs various settings to generate cutting data for the three-dimensional object 71 (see Fig. 7). Specifically, the CPU 11 configures the holding assembly 710 to be capable of holding the three-dimensional product 71A in the frame 71B with a hardened curing agent (S73). The CPU 11 also configures a notch 711 in the frame 71B of the holding assembly 710 (S73).

On the other hand, when the holding method is set to the second holding method (S71: NO), the CPU 11 performs various settings to generate cutting data for the three-dimensional object 72 (see Fig. 7), for example. Specifically, the CPU 11 configures the holding assembly 720 in which the three-dimensional product 72A is held in the frame 72B by connectors 72C based on the first connecting method (S75). Further, the CPU 11 does not configure a notch in the frame 72B of the holding assembly 720 (S75).

In the second configuration process shown in Fig. 15, when the holding method is set to the second holding method (S81: YES), the CPU 11 performs various settings to generate cutting data for the three-dimensional object 73 (see Fig. 8), for example. Specifically, the CPU 11 configures the holding assembly 730 in which the three-dimensional product 73A is held in the frame 73B by the connector 73C based on the second connecting method (S83).

On the other hand, when the fourth holding method is set as the holding method (S81: NO, S85: YES), the CPU 11 performs various settings to generate cutting data for the three-dimensional object 74 (see Fig. 8), for example. Specifically, the CPU 11 configures the holding assembly 740 in which the three-dimensional product 74A is held in the frame 74B by the disposable board 74C (S87).

On the other hand, when the fifth holding method is set as the holding method (S81: NO, S85: NO), the CPU 11 performs various settings to generate cutting data for the three-dimensional object 75 (see Fig. 8), for example. Specifically, the CPU 11 configures the holding assembly 750 with which the three-dimensional product 75A is held in the frame 75B by the connectors 75C and a disposable board based on the first connecting method (S89).

As shown in Fig. 13, after completing either the first configuration process (S25) or the second configuration process (S27), the CPU 11 determines the three-dimensional object based on the three-dimensional data obtained in S11 and the conditions set through the process in S25 or S27 (S29). The CPU 11 modifies the shape of the three-dimensional product included in the three-dimensional object determined in S29 based on modifiable items (1) and (2) and their modification content inputted through the modification screen (S31). The CPU 11 sets the sizes of the connectors in the holding object based on the modifiable item (3) and its modification content inputted through the modification screen (S33). The CPU 11 sets the orientation of the Z-axis among the reference axes in the three-dimensional data, which specifies the three-dimensional product included in the three-dimensional object, based on the modifiable item (4) and its modification content inputted via the modification screen (S35).

The CPU 11 generates cutting data based on the three-dimensional data in order for the cutting device 22 to cut the three-dimensional object configured through the processes in S29-S35 (S37). Note that the CPU 11 generates one side cutting data for cutting the one side in the Z direction and other side cutting data for cutting the other side in the Z direction when the double-sided cutting method is set as the fabrication method. On the other hand, the CPU 11 generates only one side cutting data for cutting the one side in the Z direction as the cutting data when the single-sided cutting method is set as the fabrication method.

The CPU 11 sets a filename for the cutting data generated in S37 (S61). The filename includes a character string specifying parameters of the holding assembly in the three-dimensional object. The parameters are for specifying the size of the frame, for the shape of the connectors, and for the presence or absence of an auxiliary frame. The CPU 11 transmits the generated cutting data to the cutting device 22 (S63).

The cutting device 22 receives the cutting data from the data generation device 10. The cutting device 22 is driven to cut the workpiece held in the holding stand based on the received cutting data to produce a three-dimensional object (see S207 of Fig. 2).

When the first fabrication method and the double-sided cutting method are set as the fabrication method and the second holding method is set as the holding method, the user first drives the cutting device 22 based on the one side cutting data to perform a cutting process on the surface of the workpiece on the one side in the Z direction. Next, the user removes the workpiece from the holding stand and reverses the orientation of the workpiece in the Z direction. Next, the user places the inverted workpiece back in the holding stand of the cutting device 22. In this state, the user drives the cutting device 22 based on the other side cutting data to perform a cutting process on the surface of the workpiece on the other side in the Z direction. This produces a three-dimensional object that has been cut on both sides in the Z direction.

Further, when the first fabrication method and the double-sided cutting method are set as the fabrication method while the first holding method is set as the holding method, the user performs a cutting process on the surface of the workpiece on the one side in the Z direction. Subsequently, once the user has removed the workpiece from the holding stand, the user fills the gap between the three-dimensional product and the frame with a curing agent and hardens the curing agent. As a result, the three-dimensional product in the three-dimensional object cut only on the one side in the Z direction is held in the frame by the hardened curing agent. In this state, the user reverses the orientation of the workpiece in the Z direction and controls the cutting device 22 to perform cutting on the other side in the Z direction. This produces a three-dimensional object that has been cut on both sides in the Z direction.

Further, when the first fabrication method and the single-sided cutting method are set as the fabrication method and the second holding method is set as the holding method, the user places the workpiece in the holding stand of the cutting device 22 and performs a cutting process with the cutting device 22 on the surface of the workpiece on the one side in the Z direction. This produces a three-dimensional object that has been cut on one side in the Z direction.

Further, when the first fabrication method and the single-sided cutting method are set as the fabrication method while either the fourth holding method or the fifth holding method is set as the holding method, the user bonds a disposable board to the surface of the workpiece on the other side in the Z direction. In this state, the user places the workpiece into the holding stand of the cutting device 22 and controls the cutting device 22 to perform a cutting process on the surface of the workpiece on the one side in the Z direction. This produces a three-dimensional object that has been cut on one side in the Z direction.

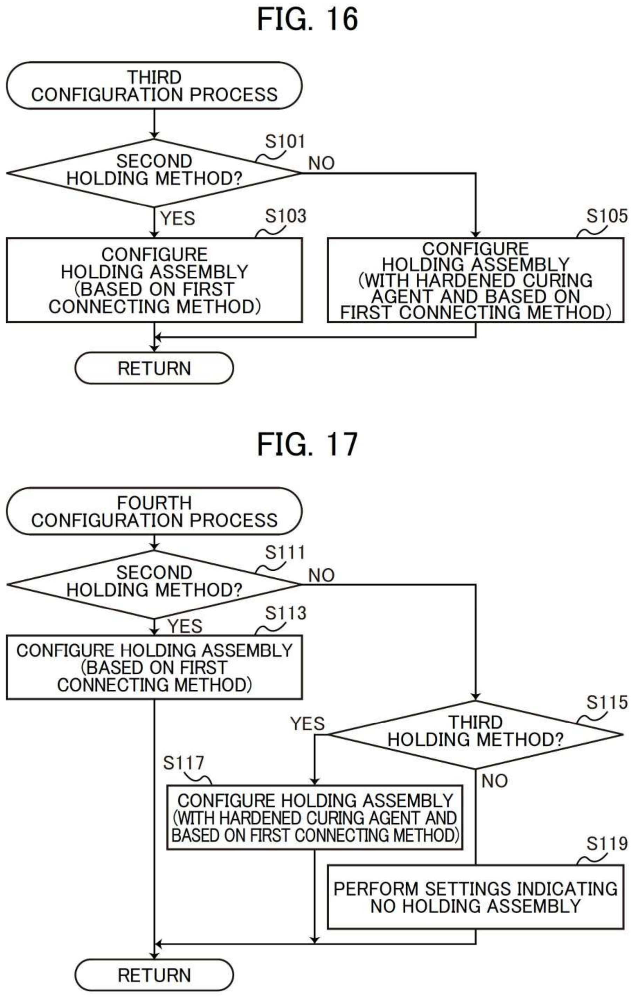

As shown in Fig. 13, when the fabrication method is set to the second fabrication method (S21: NO) and the double-sided cutting method (S43: YES), the CPU 11 executes a third configuration process described later (see Fig. 16) to generate model data for fabricating one of the intermediate bodies 61 and 62 and cutting data for fabricating one of the three-dimensional objects 76 and 77 shown in Figs. 9 and 10 (S45). The process advances to S49 after the CPU 11 has completed the third configuration process. When the fabrication method is set to the second fabrication method (S21: NO) and the single-sided cutting method (S43: NO), the CPU 11 executes a fourth configuration process described later (see Fig. 17) to generate model data for fabricating one of the intermediate bodies 63-65 and cutting data for fabricating one of the three-dimensional objects 78-80 shown in Figs. 11 and 12 (S47). The process advances to S49 after the CPU 11 completes the fourth configuration process.

In the third configuration process shown in Fig. 16, when the holding method is set to the second holding method (S101: YES), the CPU 11 performs various settings to generate model data for the intermediate product 61 (see Fig. 9), for example. Specifically, the CPU 11 configures the holding assembly 610 to have the three-dimensional product 61A held in the frame 61B by connectors 61D based on the first connecting method and to include an auxiliary frame 61C (S103). The CPU 11 also performs various settings to generate cutting data for the three-dimensional object 76 (see Fig. 9), for example. Specifically, the CPU 11 configures the holding assembly 760 to have the three-dimensional product 76A held in the frame 76B by connectors 76D based on the first connecting method (S103).

On the other hand, when the third holding method is set as the holding method (S101: NO), the CPU 11 performs various settings for generating model data for the intermediate product 62 (see Fig. 10), for example. Specifically, the CPU 11 configures the holding assembly 620 to have the three-dimensional product 62A held in the frame 62B by the connectors 62D based on the first connecting method and to include the auxiliary frame 62C (S105). The CPU 11 also performs various settings for generating cutting data for the three-dimensional object 77 (see Fig. 10), for example. Specifically, the CPU 11 configures the holding assembly 770 such that the three-dimensional product 77A is held in the frame 77B by the connectors 77D based on the first connecting method and by a hardened curing agent during the process of cutting the one side in the Z direction and the connectors 77D are cut in the process of cutting the other side in the Z direction (S105).

In the fourth configuration process shown in Fig. 17, when the holding method is set to the second holding method (S111: YES), the CPU 11 performs various settings to generate model data for the intermediate product 63 (see Fig. 11), for example. Specifically, the CPU 11 configures the holding assembly 630 to have the three-dimensional product 63A held in the frame 63B by connectors 63D based on the first connecting method and to include the auxiliary frame 63C. The CPU 11 also performs various settings to generate cutting data for the three-dimensional object 78 (see Fig. 11), for example. Specifically, the CPU 11 configures the three-dimensional object 78 to have the three-dimensional product 78A held in the frame 78B by connectors 78D based on the first connecting method (S113).

On the other hand, when the third holding method is set as the holding method (S111: NO, S115: YES), the CPU 11 performs various settings to generate model data for the intermediate product 64 (see Fig. 12), for example. Specifically, the CPU 11 configures the holding assembly 640 to have the three-dimensional product 64A held in the frame 64B by connectors 64D based on the first connecting method and to include the auxiliary frame 64C (S105). The CPU 11 also performs various settings for generating cutting data for the three-dimensional object 79 (see Fig. 12), for example. Specifically, the CPU 11 configures the holding assembly 790 such that the three-dimensional product 79A is held in the frame 79B during the cutting process using connectors based on the first connecting method and a hardened curing agent, and the connectors are ultimately removed by cutting (S117).

However, when the third holding method is not set as the holding method (S115: NO), the CPU 11 performs various settings to generate model data for the intermediate product 65 (see Fig. 12), for example. Specifically, the CPU 11 configures the intermediate product 65 to have only the three-dimensional product and no holding assembly (S119). The CPU 11 also performs various settings to generate cutting data for the three-dimensional object 80 (see Fig. 12), for example. Specifically, the CPU 11 configures a three-dimensional object 80 to have only the three-dimensional product and no holding assembly (S119).

As shown in Fig. 13, after the CPU 11 has completed the third configuration process (S45) or the fourth configuration process (S47), the CPU 11 determines an intermediate product and a three-dimensional object based on the three-dimensional data obtained in S11 (see Fig. 13) and the conditions set in the process of S45 or S47 (S49). The CPU 11 modifies the shape of the three-dimensional product contained in the intermediate product and the three-dimensional object determined in S49 based on the modifiable items (1) and (2) and their modification content inputted via the modification screen (S51). The CPU 11 sets the sizes of the connectors in the holding assembly contained in the intermediate product and the three-dimensional object determined in S49 based on the modifiable item (3) and its modification content inputted via the modification screen (S53). The CPU 11 sets the orientation of the Z-axis among the reference axes in the three-dimensional data, which represents the three-dimensional product contained in the intermediate product and the three-dimensional object, based on the modifiable item (4) and its modification content inputted via the modification screen (S55).

The CPU 11 generates model data based on the three-dimensional data for building the intermediate product set through the process of S49-S55 with the 3D printer 21 (S57). The CPU 11 also generates cutting data for performing cutting operations to fabricate the three-dimensional object set through the process of S49-S55 with the cutting device 22 based on the three-dimensional data (S57). When the double-sided cutting method is set as the fabrication method, the CPU 11 generates one side cutting data for cutting the one side in the Z direction and other side cutting data for cutting the other side in the Z direction.

The CPU 11 sets a filename for the model data generated in S57 (S61). The filename contains a character string specifying parameters of the holding assembly in the intermediate product. The CPU 11 transmits the model data to the 3D printer (S63). The CPU 11 also sets a filename for the cutting data generated in S57 (S61). The filename contains a character string specifying parameters of the holding assembly (the frame and connectors) in the three-dimensional object (S61). The CPU 11 transmits the cutting data to the cutting device 22 (S63). The 3D printer 21 receives the model data from the data generation device 10. The cutting device 22 receives the cutting data from the data generation device 10.

Based on the received model data, the 3D printer 21 is driven to produce the intermediate product by selectively irradiating light onto a photocurable resin (see S211 of Fig. 2). The user removes the intermediate product from the 3D printer and places the intermediate product into the holding stand of the cutting device 22. Based on the received cutting data, the cutting device 22 is driven to produce a three-dimensional object by cutting the intermediate product held in the holding stand (see S213 of Fig. 2).

When the second fabrication method and the double-sided cutting method are set as the fabrication method and the second holding method is set as the holding method, the user first drives the cutting device 22 based on the one side cutting data to perform a cutting process on the surface of the intermediate product on the one side in the Z direction. Next, the user removes the intermediate product from the holding stand, reverses the orientation of the intermediate product in the Z direction, and places the inverted intermediate product back into the holding stand of the cutting device 22. In this state, the user drives the cutting device 22 based on the other side cutting data to perform a cutting process on the surface of the intermediate product on the other side in the Z direction. This produces a three-dimensional object that has been cut on both sides in the Z direction.

Further, when the second fabrication method and the double-sided cutting method are set as the fabrication method and the third holding method is set as the holding method, the user performs a cutting process on the surface of the intermediate product on the one side in the Z direction and, after subsequently removing the intermediate product from the holding stand, fills the gap between the three-dimensional product and the auxiliary frame with a curing agent and hardens the curing agent. As a result, the three-dimensional product of the three-dimensional object that has been cut on the one side in the Z direction is held in the frame by the hardened curing agent and the connectors. In this state, the user reverses the orientation of the intermediate product in the Z direction and controls the cutting device 22 to perform cutting in the other side in the Z direction. This produces a three-dimensional object that has been cut on both sides in the Z direction.

Further, when the second fabrication method and the single-sided cutting method are set as the fabrication method and the second holding method is set as the holding method, the user drives the cutting device 22 based on the cutting data to perform a cutting process on the surface of the intermediate product on the one side in the Z direction. This produces a three-dimensional object that has been cut on one side in the Z direction.

Further, when the second fabrication method and the single-sided cutting method are set as the fabrication method and third holding method is set as the holding method, the user fills the gap between the three-dimensional product and the auxiliary frame in the intermediate product held in the holding stand with a curing agent and hardens the curing agent. As a result, the three-dimensional product is held in the frame by the hardened curing agent and the connectors. In this state, the user controls the cutting device 22 to perform a cutting process on the one side in the Z direction. This produces a three-dimensional object that has been cut on the one side in the Z direction.

### Functions and Effects of the Embodiment

The data generation device 10 generates cutting data for fabricating a three-dimensional object with the cutting device 22. Therefore, the cutting device 22 can cut a workpiece formed of the material to be used in the final product, for example, to produce a three-dimensional object that contains a three-dimensional product formed of the material for the final product. The three-dimensional object includes a holding assembly whose shape is defined based on the fabrication and holding methods set via the operation unit 17, and a three-dimensional product. Hence, by prompting the user to select a fabrication method and holding method appropriate for the intended use, the system 9 can use the cutting device 22 to produce a three-dimensional object containing a three-dimensional product appropriate for the intended use.

The fabrication methods include a first fabrication method according to which the cutting device 22 cuts a workpiece to produce a three-dimensional object, and a second fabrication method according to which the cutting device 22 cuts an intermediate product fabricated by the 3D printer 21 to produce a three-dimensional object. When fabricating a three-dimensional object according to the second fabrication method, the data generation device 10 can generate model data with which the 3D printer 21 fabricates an intermediate product and cutting data with which the cutting device 22 cuts the intermediate product to produce the three-dimensional object. In this case, the three-dimensional product is fabricated from resin. Therefore, the system 9 can quickly and accurately fabricate three-dimensional objects without the need for molds. In this way, the system 9 can fabricate three-dimensional products according to methods suited to the intended use.

The holding methods include a first holding method according to which a three-dimensional product is held in a frame by a hardened curing agent filling the area between the frame and the three-dimensional product, and a second holding method according to which a three-dimensional product is held by connecting the frame and three-dimensional product with connectors extending between the frame and the three-dimensional product. Therefore, the system 9 can fabricate a three-dimensional object using the cutting device 22 to cut the three-dimensional product held in the frame according to one of the first and second holding methods.

The second holding method includes a first connecting method according to which the three-dimensional product and frame are connected by rod-shaped connectors extending in the Y direction, and a second connecting method according to which the three-dimensional product and frame are connected by a connector having a planar shape. In this case, when the three-dimensional product is to be held in the frame according to the second holding method, the system 9 can change the shape of the connectors in accordance with the specifications of the cutting device 22 and the shape of the three-dimensional product.

The length L11 of the frame 71B when the first fabrication method and first holding method are set (see Fig. 7) is longer than the length L21 of the frame 72B when the first fabrication method and second holding method are set (see Fig. 7). Further, the distance L22 when the first fabrication method and second holding method are set (see Fig. 7) is shorter than the distance L12 when the first fabrication method and first holding method are set (see Fig. 7). The distance L23 when the first fabrication method and second holding method are set (see Fig. 7) is shorter than the distance L13 when the first fabrication method and first holding method are set (see Fig. 7). In these cases, the hardened curing agent can stably hold the three-dimensional product 71A in the frame 71B since the area of contact between the hardened curing agent filling between the three-dimensional product 71A and frame 71B and the frame 71B can be increased. Moreover, the amount of work material required to fabricate the three-dimensional object 72 can be reduced since the volume of the frame 72B can be reduced.

When the first fabrication method is set and the first holding method or fourth holding method is set (see Figs. 7 and 8), the parts between the frame and the three-dimensional product are set as the area to be cut by the cutting device 22. In this case, the cutting device 22 can cut the parts between the frame and three-dimensional product to produce a three-dimensional product detached from the frame.

When comparing the distances L42, L46, and L66 in the case of the second fabrication method and second holding method being set (see Figs. 9 and 11) to the distances L52, L56, and L76 in the case of the second fabrication method and third holding method being set (see Figs. 10 and 12), the distance L52 is greater than the distance L42, the distance L56 is greater than the distance L46, and the distance L76 is greater than the distance L66. When comparing the distances L43, L47, L63, and L67 in the case of the second fabrication method and second holding method being set (see Fig. 9) to the distances L53, L57, L73, and L77 in the case of the second fabrication method and the third holding method being set (see Fig. 10), the distance L53 is greater than the distance L43, the distance L57 is greater than the distance L47, the distance L73 is greater than the distance L63, and the distance L77 is greater than the distance L67. Accordingly, the hardened curing agent can stably hold the three-dimensional product in the auxiliary frame since the area of contact between the hardened curing agent and the auxiliary frame can be increased. Moreover, the quantity of photocurable resin required to fabricate the three-dimensional object can be reduced.

When the double-sided cutting method and the second holding method are set (see Figs. 7 and 9), the distance L22 is equal to the distance L23, the distance L42 is equal to the distance L43, and the distance L46 is equal to the distance L47. When the double-sided cutting method and the third holding method are set (see Fig. 10), the distance L52 is equal to the distance L53 and the distance L56 is equal to the distance L57. When the single-sided cutting method, the second holding method, and the first connecting method are set (see Fig. 11), the distance L63 is greater than the distance L62 and the distance L67 is greater than the distance L66. When the single-sided cutting method, the third holding method, and the first connecting method are set (see Fig. 12), the distance L73 is greater than the distance L72 and the distance L77 is greater than the distance L76. Accordingly, the double-sided cutting can be performed using the cutting device 22 while the quantities of work material and photocurable resin used can be reduced when single-sided cut is performed.

When the double-sided cutting method is set as the fabrication method, the data generation device 10 generates one side cutting data for cutting the one side in the Z direction, and other side cutting data for cutting the other side in the Z direction. In this case, the system 9 can produce a three-dimensional object containing a three-dimensional product that has been cut on both sides in the second direction.

The length L41 of the frames 61B and 76B when the second fabrication method, double-sided cutting method, and second holding method are set (see Fig. 9) is longer than the length L61 of the frames 63B and 78B when the second fabrication method, single-sided cutting method, and second holding method are set (see Fig. 11). The length L51 of the frames 62B and 77B when the second fabrication method, double-sided cutting method, and third holding method are set (see Fig. 10) is longer than the length L71 of the frames 64B and 79B when the second fabrication method, single-sided cutting method, and third holding method are set (see Fig. 12). Accordingly, the double-sided cutting can be performed using the cutting device 22 while the quantities of work material and photocurable resin used can be reduced when single-sided cut is performed.

When the first fabrication method and the single-sided cutting method are set, the second connecting method can be set as the connecting method (see Figs. 4 and 8). When the three-dimensional product is held in the frame according to the second connecting method, the position of the workpiece can be stabilized while the cutting device 22 cuts only one side in the Z direction. Therefore, the cutting device 22 can cut the workpiece with high accuracy.

When the first fabrication method, double-sided cutting method, and first holding method are set (see Fig. 7), the frame 71B has a notch 711. In this case, when the three-dimensional product is held by a hardened curing agent filling the area between the three-dimensional product 71A and frame 71B, the notch 711 can restrict the hardened curing agent from detaching from the frame 71B. The length L14 of the frame 71B having the notch 711 is longer than the length L24 of the frame 72B not having the notch by the dimension of the notch 711 in the Y direction. This configuration can maintain the strength of the frame 71B by restricting the width of the frame 71B from being reduced due to the formation of the notch 711.

The holding assembly of the intermediate product includes an auxiliary frame in addition to the frame. With this configuration, the auxiliary frame can improve the strength of the intermediate product. Further, the quantity of curing agent filling the area between the auxiliary frame and the three-dimensional product can be made less than the quantity of curing agent filling the area between the frame and the three-dimensional product. Therefore, the three-dimensional product can be held while using a smaller amount of curing agent.

When the second fabrication method and the double-sided cutting method are set (see Figs. 9 and 10), the shape of the three-dimensional product in the intermediate product is determined by increasing a thickness of a surface of the original three-dimensional product specified in the three-dimensional data on each of the one side and the other side in the Z direction by Δd. When the second fabrication method and the single-sided cutting method are set (see Figs. 11 and 12), the shape of the three-dimensional product in the intermediate product is determined by increasing a thickness of a surface of the original three-dimensional product specified in the three-dimensional data on the one side in the Z direction by Δd. This configuration can produce a three-dimensional object with a good finish by cutting the three-dimensional product in the intermediate product with the cutting device 22 to remove the increased amounts.

When the modifiable items (1) "Thickness of three-dimensional product" and (2) "Formation of holes" and their modification content are set, the data generation device 10 generates model data and cutting data for fabricating a three-dimensional object containing a three-dimensional product having the modified shape. This enables the user to produce the three-dimensional object after changing the shape of the three-dimensional product to a intended shape. When (1) "Thickness of three-dimensional product" is set, for example, the data generation device 10 can produce a three-dimensional object in which the thickness of a modification area specified in the three-dimensional product is increased or decreased. Further, when (2) "Formation of holes" is set, the data generation device 10 can produce a three-dimensional object in which one or more holes are formed in specified modification areas of the three-dimensional product.

When (3) "Size of connectors" is set, the data generation device 10 can set the cross-sectional diameter of one or more connectors, which serve to hold the three-dimensional product in the frame according to the first connecting method, to user-intended sizes. When (4) "Orientation of three-dimensional product" is set, the data generation device 10 can set the Z-direction orientation of the three-dimensional product relative to the frame and can generate cutting data for the three-dimensional object in accordance with the specifications of the cutting device 22.

The data generation device 10 sets filenames for the model data and cutting data to include a character string specifying the parameters of the holding assemblies in the intermediate product and the three-dimensional object. In this case, the 3D printer 21 and cutting device 22 can easily verify the specifications of the holding assemblies from the filenames.

### Variations

The present invention is not limited to the above embodiment, and various modifications are possible. The system 9 may include only the cutting device 22 and not the 3D printer 21. The system 9 need not include the data generation device 10, while the cutting device 22 may generate cutting data or the 3D printer 21 may generate both model data and cutting data. The specific examples of lengths and distances and size relationships in the above embodiment are only examples, and other values and other relationships are possible.

The data generation device 10 sets the fabrication method and the holding method based on user operations performed on the operation unit 17 while the settings screen is displayed. However, the data generation device 10 may set the fabrication method and holding method for generating cutting data according to a different method. For example, the data generation device 10 may independently select an appropriate fabrication method and holding method based on various factors, such as the application of the three-dimensional product being fabricated, the material of the final product, the specifications of the 3D printer 21, and the specifications of the cutting device 22.

In the above description, any of the first through fifth holding methods can be set as the holding method. However, the holding method is not limited to one of these first through fifth holding methods but may be set to another holding method.

In the first connecting method, the three-dimensional product is held in the frame by connectors each having rod-shaped member extending in the Y-direction. However, the connectors holding the three-dimensional product in the frame may include a plurality of rod-shaped members extending in the Y direction and a plurality of rod-shaped members extending in the X direction.

When the second fabrication method is set (see Figs. 9 through 12), parts between the frame and the three-dimensional product may be set as areas to be cut by the cutting device 22. In this case, the connectors and the auxiliary frame included in the intermediate product may be removed by cutting during the cutting process with the cutting device 22.

The second connecting method may be set as the connecting method even when the first fabrication method and double-sided cutting method are set (see Fig. 3).

The frame 71B may not have the notch 711. Further, notches may also be provided in the frame 75B and the auxiliary frames 62C and 64C in which the three-dimensional product is held with a hardened curing agent.

The holding assembly in the intermediate product may not include an auxiliary frame. The holding assembly in the three-dimensional object also may include an auxiliary frame.

In the above description, the shape of the three-dimensional product when the second fabrication method is set is determined by increasing the thicknesses of surfaces of the original three-dimensional product specified by the three-dimensional data on both the one side and the other side in the Z direction, or by increasing a thickness of a surface of the original three-dimensional product specified by the three-dimensional data on the one side in the Z direction. However, the shape of the three-dimensional product may also be configured by increasing thicknesses of surfaces of the original three-dimensional product crossing the Z direction. In other words, the three-dimensional product may be shaped by increasing the thickness of the original three-dimensional product on all surfaces other than surfaces orthogonal to the Z direction.

When (1) "Thickness of three-dimensional product" is set, the data generation device 10 may be configured to allow some areas on end surfaces on one or both sides of the three-dimensional product in the Z direction to be set as areas at which the thickness is to be modified. Areas at which the thickness can be modified are not limited to the one side and the other side in the Z direction. The thicknesses at surfaces crossing the Z direction may also be modifiable. When (2) "Formation of holes" is set, the diameters of holes can be set in addition to their locations.

When (3) "Size of connectors" is set, the data generation device 10 may also be capable of setting the cross-sectional shape for each of the plurality of rod-shaped members included in the connectors and their number. A cross-sectional diameter may be set collectively for the plurality of rod-shaped members as the size of the connectors. When (4) "Orientation of three-dimensional product" is set, the data generation device 10 may be capable of setting not only the orientation in the Z direction but also the orientation in the X and Y directions.

### Others

The process of S11 is an example of the obtaining step. The X and Y directions are examples of the first direction. The processes of S21, S23, and S43 are examples of the step of specifying. The processes of S37 and S57 are examples of the step of generating. The processes of S31 and S51 are examples of the step of modifying. The processes of S33 and S53 are examples of the first setting step. The processes of S35 and S55 are examples of the second setting step. The 3D printer 21 is an example of the three-dimensional modeling device. The CPU 11 performing the process of S11 is an example of the means for obtaining. The process of S21, S23, and S43 is examples of the means for specifying. The CPU performing the processes of S37 and S57 are examples of the means for generating.

### [Reference Signs List]

9: three-dimensional modeling system
10: data generation device
21: 3D printer
22: cutting device

## Claims

1. A data generation program that a computer executes, comprising:
a step of obtaining three-dimensional data representing a shape of a three-dimensional product;
a step of specifying one or more of fabrication methods and one of holding methods, each of the fabrication methods being a method according to which the three-dimensional product is fabricated with a cutting device configured to perform cutting, each of the holding methods being a method according to which the three-dimensional product is held in a frame that covers an outside of the three-dimensional product in a first direction; and
a step of generating cutting data based on the three-dimensional data, the cutting data being for fabricating a three-dimensional object with the cutting device, the three-dimensional object including the three-dimensional product and a holding assembly, a shape of the holding assembly being defined based on the one or more of fabrication methods and the one of holding methods both specified in the step of specifying.

2. The data generation program according to claim 1,
wherein the holding methods include:
a first holding method according to which the three-dimensional product is held in the frame by a hardened curing agent filling a gap between the frame and the three-dimensional product; and
a second holding method according to which the frame and the three-dimensional product are connected to each other by a connector extending between the frame and the three-dimensional product.

3. The data generation program according to claim 2,
wherein the second holding method includes one of:
a first connecting method according to which a connector connects a surface of the three-dimensional product with a surface of the frame, the connector having a rod shape extending in the first direction, both the surface of the three-dimensional product and the surface of the frame crossing the first direction; and
a second connecting method according to which a connector connects a surface of the three-dimensional product with a surface of the connector, the connector having a planar shape extending in the first direction from the frame, the surface of the three-dimensional product extending in the first direction.

4. The data generation program according to claim 2,
wherein when the first holding method is specified in the step of specifying, the frame is set to have a first length in a second direction orthogonal to the first direction,
wherein when the second holding method is specified in the step of specifying, the frame is set to have a second length in the second direction,
wherein the second length is shorter than the first length.

5. The data generation program according to claim 1,
wherein the fabrication methods include:
a first fabrication method according to which the three-dimensional object is fabricated by cutting a workpiece; and
a second fabrication method according to which the three-dimensional object is fabricated by fabricating an intermediate product with a three-dimensional modeling device and cutting the intermediate product with the cutting device,
wherein when the first fabrication method is specified in the step of specifying, the step of generating generates the cutting data for fabricating the three-dimensional product by cutting the workpiece with the cutting device,
wherein when the second fabrication method is specified in the step of specifying, the step of generating generates model data for fabricating the intermediate product with the three-dimensional modeling device, and generates the cutting data for fabricating the three-dimensional product by cutting the intermediate product with the cutting device.

6. The data generation program according to claim 5,
wherein the holding methods include:
a first holding method according to which the three-dimensional product is held in the frame by a hardened curing agent filling a gap between the frame and the three-dimensional product; and
a second holding method according to which the frame and the three-dimensional product are connected to each other by a connector extending between the frame and the three-dimensional product,
wherein when the first fabrication method and the first holding method are specified in the step of specifying, a distance by which an end portion of the three-dimensional product on one side in a second direction and an end portion of the frame on the one side in the second direction are spaced apart from each other in the second direction is determined as a first distance, and a distance by which an end portion of the three-dimensional product on an other side in the second direction and an end portion of the frame on the other side in the second direction are spaced apart from each other in the second direction is determined as a second distance, the second direction being orthogonal to the first direction,
wherein when the first fabrication method and the second holding method are specified in the step of specifying, a distance by which the end portion of the three-dimensional product on the one side in the second direction and the end portion of the frame on the one side in the second direction are spaced apart from each other in the second direction is determined as a third distance, and a distance by which the end portion of the three-dimensional product on the other side in the second direction and the end portion of the frame on the other side in the second direction are spaced apart from each other in the second direction is determined as a fourth distance,
wherein the third distance is less than the first distance and the fourth distance is less than the second distance.

7. The data generation program according to claim 5,
wherein the holding methods include:
a second holding method according to which the frame and the three-dimensional product are connected to each other by a connector extending between the frame and the three-dimensional product; and
a third holding method according to which the frame and the three-dimensional product are connected to each other by the connector and a hardened curing agent,
wherein when the second fabrication method and the second holding method are specified in the step of specifying, a distance by which an end portion of the three-dimensional product on an other side in a second direction and an end portion of the frame on the other side in the second direction are spaced apart from each other in the second direction is determined as a second distance, the second direction being orthogonal to the first direction,
wherein when the second fabrication method and the third holding method are specified in the step of specifying, a distance by which an end portion of the three-dimensional product on the other side in the second direction and an end portion of the frame on the other side in the second direction are spaced apart from each other in the second direction is determined as a fourth distance,
wherein the fourth distance is greater than the second distance.

8. The data generation program according to claim 5,
wherein the fabrication methods include:
a single-sided cutting method according to which one or more surfaces of the three-dimensional product on only one side in a second direction are cut by the cutting device, the second direction being orthogonal to the first direction,
wherein when the second fabrication method is specified in the step of specifying, a distance by which an end portion of the three-dimensional product on the one side in the second direction and an end portion of the frame on the one side in the second direction are spaced apart from each other in the second direction is determined as a first distance, and a distance by which an end portion of the three-dimensional product on an other side in the second direction and an end portion of the frame on the other side in the second direction are spaced apart from each other in the second direction is determined as a second distance,
wherein when the second fabrication method and the single-sided cutting method are specified in the step of specifying, the second distance is greater than the first distance.

9. The data generation program according to claim 7,
wherein the fabrication methods include:
a single-sided cutting method according to which one or more surfaces of the three-dimensional product on only one side in the second direction are cut by the cutting device; and
a double-sided cutting method according to which surfaces of the three-dimensional product on both the one side and the other side in the second direction are cut by the cutting device,
wherein when the double-sided cutting method and the third holding method are specified in the step of specifying, the step of generating generates the cutting data for cutting a surface of the three-dimensional product on the one side, and generates the cutting data for cutting a surface of the three-dimensional product on the other side.

10. The data generation program according to claim 1 or 5,
wherein the fabrication methods include:
a single-sided cutting method according to which one or more surfaces of the three-dimensional product on only one side in a second direction are cut by the cutting device, the second direction being orthogonal to the first direction; and
a double-sided cutting method according to which surfaces of the three-dimensional product on both the one side and an other side in the second direction are cut by the cutting device,
wherein when the single-sided cutting method is specified in the step of specifying, the frame is set to have a third length in the second direction,
wherein when the double-sided cutting method is specified in the step of specifying, the frame is set to have a fourth length in the second direction,
wherein the fourth length is longer than the third length.

11. The data generation program according to claim 10,
wherein when the single-sided cutting method is specified in the step of specifying, a second connecting method can be specified as one of the holding methods in the step of specifying,
wherein according to the second connecting method, the three-dimensional product and the frame are connected by a connector extending between an end portion of the frame on the other side in the second direction and an end portion of the three-dimensional product on the other side in the second direction.

12. The data generation program according to claim 1 or 5,
wherein the holding methods include:
a first holding method according to which the three-dimensional product is held in the frame by a hardened curing agent filling a gap between the frame and the three-dimensional product; and
a second holding method according to which the frame and the three-dimensional product are connected to each other by a connector extending between the frame and the three-dimensional product,
wherein when the first holding method is specified in the step of specifying, the frame has a notch in an area of an end portion of the frame in a second direction, the second direction being orthogonal to the first direction, the area being adjacent to the three-dimensional product,
wherein when the second holding method is specified in the step of specifying, the frame does not have the notch.

13. The data generation program according to claim 12,
wherein the frame having the notch is set to have a fifth length in the first direction,
wherein the frame not having the notch is set to have a sixth length in the first direction,
wherein the sixth length is shorter than the fifth length by a dimension of the notch in the first direction.

14. The data generation program according to claim 5,
wherein when the second fabrication method is specified in the step of specifying, the step of generating generates the model data for fabricating the intermediate product further including an auxiliary frame,
wherein the auxiliary frame covers the outside of the three-dimensional product in the first direction and is spaced apart from the three-dimensional product by a predetermined distance.

15. The data generation program according to claim 5,
wherein the second fabrication method includes one of:
a second single-sided cutting method according to which one or more surfaces of the three-dimensional product on only one side in a second direction are cut by the cutting device, the second direction being orthogonal to the first direction; and
a second double-sided cutting method according to which surfaces of the three-dimensional product on both the one side and an other side in the second direction are cut by the cutting device,
wherein when the second single-sided cutting method is specified in the step of specifying, the step of generating generates the model data for fabricating the intermediate product obtained by increasing a thickness of a surface of the three-dimensional product on the one side in the second direction,
wherein when the second double-sided cutting method is specified in the step of specifying, the step of generating generates the model data for fabricating the intermediate product obtained by increasing thicknesses of surfaces of the three-dimensional product on both the one side and the other side in the second direction.

16. The data generation program according to claim 1, further comprising:
a step of modifying the shape of the three-dimensional product,
wherein based on the three-dimensional data the step of generating generates the cutting data for fabricating, with the cutting device, the three-dimensional object in which the shape of the three-dimensional product has been modified by the step of modifying.

17. The data generation program according to claim 5, further comprising:
a step of modifying the shape of the three-dimensional product,
wherein when the second fabrication method is specified in the step of specifying, based on the three-dimensional data the step of generating generates the model data for fabricating, with the three-dimensional modeling device, the intermediate product in which the shape of the three-dimensional product has been modified by the step of modifying.

18. The data generation program according to claim 16 or 17, further comprising:
a step of receiving a designation of a modification portion of the three-dimensional product, the modification portion being to be modified in the step of modifying,
wherein the step of modifying includes:
increasing or decreasing a thickness of the modification portion based on the designation received in the step of receiving.

19. The data generation program according to claim 16 or 17, further comprising:
a step of receiving a designation of a modification portion of the three-dimensional product, the modification portion being to be modified in the step of modifying,
wherein the step of modifying includes:
forming a hole in the three-dimensional product at the modification portion based on the designation received in the step of receiving.

20. A data generation device comprising:
means for obtaining three-dimensional data representing a shape of a three-dimensional product;
means for specifying one or more of fabrication methods and one of holding methods, each of the fabrication methods being a method according to which the three-dimensional product is fabricated with a cutting device configured to perform cutting, each of the holding methods being a method according to which the three-dimensional product is held in a frame that covers an outside of the three-dimensional product in a first direction; and
means for generating cutting data based on the three-dimensional data, the cutting data being for fabricating a three-dimensional object with the cutting device, the three-dimensional object including the three-dimensional product and a holding assembly, a shape of the holding assembly being defined based on the one or more of fabrication methods and the one of holding methods both specified by the means for specifying.
